# EUROPEAN PATENT APPLICATION

(11) **EP 4 518 429 A1**
(43) Date of publication of application: **05.03.2025**
(21) Application number: 23794767.6
(22) Date of filing: 03.03.2023
(51) Int. Cl.: H04W 36/00

(54) **RADIO LINK MANAGEMENT CONFIGURATION METHOD AND APPARATUS, AND STORAGE MEDIUM**

(30) Priority: 29.04.2022 CN 202210474936
(71) Applicant: Datang Mobile Communications Equipment Co., Ltd., Beijing 100085 (CN)
(72) Inventor: YAN, Xue, Beijing 100085 (CN); XU, Meng, Beijing 100085 (CN); ZENG, Erlin, Beijing 100085 (CN); LIANG, Jing, Beijing 100085 (CN)
(74) Representative: Studio Torta S.p.A.
(86) International application number: PCT/CN2023/079535
(87) International publication number: WO 2023/207331

(57) **Abstract**

Embodiments of the present disclosure provide a radio link management configuration method and apparatus, and a storage medium. The method comprises: a terminal acquires a first message transmitted by a network device, the first message comprising one or more of the following configuration information: first configuration information used for radio link quality management between the terminal and a configuration cell; and second configuration information used for beam failure management between the terminal and the configuration cell; and the terminal performs radio link management between the terminal and the configuration cell on the basis of the first configuration information and/or the second configuration information. According to the radio link management configuration method and apparatus and the storage medium provided by the embodiments of the present disclosure, when a plurality of transmission and reception points are configured for the terminal, the network device configures the first configuration information and/or the second configuration information for the terminal, and the terminal performs the radio link management on the basis of the received configuration information, thereby avoiding unnecessary data interruption.

## Description

### CROSS-REFERENCES TO RELATED APPLICATIONS

The present application claims priority to Chinese patent application No. 2022104749362 filed on April 29, 2022, entitled "Radio Link Management Configuration Method and Apparatus, and Storage Medium", which is hereby incorporated by reference in its entirety.

### FIELD

The present application relates to the field of communication, and in particular, to methods and apparatuses for radio link management configuration, and a storage medium.

### BACKGROUND

An inter-cell beam management (ICBM) scenario and a multi-transmission and reception point (mTRP) scenario are involved in the 3rd generation partnership project (3GPP) protocol R17 version. Transmission and reception points (TRPs) in the ICBM scenario include a serving cell/primary transmission and reception point (pTRP) and several additional transmission and reception points (aTRPs). The TRPs in the mTRP scenario include transmission and reception point 1 (TRP1), transmission and reception point 2 (TRP2), transmission and reception point 3 (TRP3), etc.

For the ICBM scenario, in case that a radio link failure (RLF) is detected in the pTRP, a terminal and a network are transmitting data in an aTRP, and a link quality of the aTRP is good, the terminal may still be triggered for a radio resource control (RRC) reestablishment, which causes an unnecessary data interruption. For the mTRP scenario, in case that the terminal and the network are transmitting data on TRP1 and TRP2 simultaneously, a link quality of the TRP2 cannot be validly reflected by only performing radio link monitoring (RLM) for TRP1, which may trigger a reestablishment while the link quality of the TRP2 is good, and causes an unnecessary data interruption.

### BRIEF SUMMARY

Embodiments of the present application provide methods and apparatuses for radio link management configuration, and a storage medium to solve the problem of data interruption in the related art.

An embodiment of the present application provides a method for radio link management configuration, performed by a terminal, including:
obtaining a first message transmitted from a network device, where the first message includes one or more pieces of the following configuration information:
first configuration information, where the first configuration information is used for radio link quality management between the terminal and a configured cell; or
second configuration information, where the second configuration information is used for beam failure management between the terminal and a configured cell;
performing radio link quality management between the terminal and the configured cell based on the first configuration information, and/or performing beam failure management between the terminal and the configured cell based on the second configuration information;
where the configured cell is configured with at least one transmission and reception point (TRP) associated with the first message.

In some embodiments, the first configuration information includes one or multiple radio link management resource sets;
where the one radio link management resource set or each of the multiple radio link management resource sets includes one or more pieces of the following information:
a monitoring resource set;
identifier information of TRP;
configuration information of a constant for radio resource management; or
a monitoring purpose of the radio link management resource set.

In some embodiments, the monitoring resource set includes one or more pieces of the following information:
identifier information of reference signal (RS);
identifier information of TRP; or
a monitoring purpose of RS.

In some embodiments, the first configuration information includes one or multiple radio link management resource sets;
the one radio link management resource set or each of the multiple radio link management resource sets is associated with one piece of given identifier information of TRP.

In some embodiments, in case that the monitoring purpose of the radio link management resource set and/or the monitoring purpose of the RS is a given purpose, the identifier information of TRP is given identifier information of TRP, or the identifier information of TRP is identifier information of TRP associated with the RS;
where the given purpose includes one or more of the following purposes:
for radio link monitoring; or
for beam failure detection.

In some embodiments, in case that the first configuration information includes one radio link management resource set, and the one radio link management resource set is used to perform failure detection on a reference signal (RS) for one TRP, the one radio link management resource set is associated with one TRP in one or more of the following modes:
each RS in the monitoring resource set included in the one radio link management resource set is associated with one piece of given identifier information of TRP;
the one radio link management resource set only includes one piece of identifier information of TRP; all RSs in the monitoring resource set included in the one radio link management resource set are associated with the one piece of identifier information of TRP; or
each RS in the monitoring resource set included in the one radio link management resource set is associated with one piece of identifier information of TRP, and the identifier information of TRP associated with each RS is the same; the identifier information of TRP associated with each RS is included in the monitoring resource set.

In some embodiments, in case that the first configuration information includes one radio link management resource set, and the one radio link management resource set is used to perform failure detection on reference signals (RSs) for multiple TRPs, the one radio link management resource set is associated with the multiple TRPs in the following mode:
each RS in the monitoring resource set included in the one radio link management resource set is associated with one piece of identifier information of TRP; and the identifier information of TRP associated with all RSs includes multiple types of identifier information of TRP.

In some embodiments, in case that the first configuration information includes multiple radio link management resource sets, and the multiple radio link management resource sets are used to perform failure detection on reference signals (RSs) for multiple TRPs, the multiple radio link management resource sets are associated with the multiple TRPs in one or more of the following modes:
each of the multiple radio link management resource sets is associated with one or more pieces of given identifier information of TRP; or
each of the multiple radio link management resource sets includes one or more pieces of given identifier information of TRP associated with the each of the multiple radio link management resource sets.

In some embodiments, the configuration information of the constant for radio resource management includes one or more pieces of the following information:
a first timer, used for controlling RLF;
a second timer, used for controlling reestablishment;
a first in-sync threshold, used for determining in-sync;
a first out-of-sync threshold, used for determining out-of-sync;
a first counter, used for counting out-of-sync indications; or
a second counter, used for counting in-sync indications.

In some embodiments, performing the radio link quality management between the terminal and the configured cell based on the first configuration information includes:
in case that an RLF occurs between the terminal and a first TRP, performing, by the terminal, at least one or more of the following operations:
triggering a radio resource control (RRC) reestablishment procedure;
reporting RLF information between the terminal and the first TRP through another TRP where no RLF occurs;
reporting RLF information between the terminal and the first TRP through another cell; or
reporting RLF information between the terminal and the first TRP through another node;
or, includes:
   in case that a cell RLF occurs, performing, by the terminal, at least one or more of the following operations:
   triggering a radio resource control (RRC) reestablishment procedure;
   reporting cell RLF information through another TRP where no RLF occurs;
   reporting cell RLF information through another cell; or
   reporting cell RLF information through another node;
   or, includes:
      in a dual connectivity (DC) scenario, in case that an RLF is detected in a primary cell (PCell) or in a primary secondary cell (PSCell), the terminal transmits a master cell group (MCG) failure message or a secondary cell group (SCG) failure message;
      where the first TRP is one of the at least one TRP associated with the first message.

In some embodiments, in case that the first TRP is a given TRP, the RLF between the terminal and the first TRP includes one or more of the following situations:
the terminal determines that a failure occurs in a radio link between the terminal and the first TRP based on identifier information of the first TRP included in the one radio link management resource set; or
the terminal determines that a failure occurs in a radio link between the terminal and the first TRP based on identifier information of the first TRP included in one radio link management resource set in the multiple radio link management resource sets;
in case that the first TRP is a TRP other than the given TRP, the RLF between the terminal and the first TRP includes one or more of the following situations:
   the terminal determines that a failure occurs in a radio link between the terminal and the first TRP based on part or all of identifier information of the first TRP included in the one radio link management resource set; or
   the terminal determines that a failure occurs in a radio link between the terminal and the first TRP based on part or all of identifier information of the first TRP included in the multiple radio link management resource sets;
   the cell RLF includes one or more of the following situations:
      the terminal determines the cell RLF based on identifier information of a second TRP included in the one radio link management resource set;
      the terminal determines the cell RLF based on identifier information of a second TRP included in one radio link management resource set in the multiple radio link management resource sets;
      the terminal determines the cell RLF based on part or all of identifier information of a third TRP included in the one radio link management resource set;
      the terminal determines the cell RLF based on part or all of identifier information of a third TRP included in the multiple radio link management resource sets; or
      the terminal determines the cell RLF based on identifier information of a second TRP and all of identifier information of a third TRP included in the one radio link management resource set or the multiple radio link management resource sets;
      where any of the second TRP and the third TRP is one of the at least one TRP associated with the first message.

In some embodiments, the second configuration information includes a beam failure management resource set;
the beam failure management resource set includes at least one piece of candidate beam recovery configuration information; and the candidate beam recovery configuration information includes one or more pieces of the following information:
a candidate beam reference signal (RS) identifier; or
a TRP identifier.

An embodiment of the present application provides a method for radio link management configuration, performed by a network device, including:
transmitting a first message to a terminal, where the first message includes one or more pieces of the following configuration information:
first configuration information, where the first configuration information is used for radio link quality management between the terminal and a configured cell; or
second configuration information, where the second configuration information is used for beam failure management between the terminal and a configured cell;
where the configured cell is configured with at least one transmission and reception point (TRP) associated with the first message.

In some embodiments, the first configuration information includes one or multiple radio link management resource sets;
where the one radio link management resource set or each of the multiple radio link management resource sets includes one or more pieces of the following information:
a monitoring resource set;
identifier information of TRP;
configuration information of a constant for radio resource management; or
a monitoring purpose of the radio link management resource set.

In some embodiments, the monitoring resource set includes one or more pieces of the following information:
identifier information of reference signal (RS);
identifier information of TRP; or
a monitoring purpose of RS.

In some embodiments, the configuration information of the constant for radio resource management includes one or more pieces of the following information:
a first timer, used for controlling RLF;
a second timer, used for controlling reestablishment;
a first in-sync threshold, used for determining in-sync;
a first out-of-sync threshold, used for determining out-of-sync;
a first counter, used for counting out-of-sync indications; or
a second counter, used for counting in-sync indications.

An embodiment of the present application provides a terminal, including a memory, a transceiver and a processor,
where the memory is used for storing a computer program, the transceiver is used for transmitting and receiving data under control of the processor, and the processor is used for reading the computer program in the memory and performing the following operations of:
obtaining a first message transmitted from a network device, where the first message includes one or more pieces of the following configuration information:
first configuration information, where the first configuration information is used for radio link quality management between the terminal and a configured cell; or
second configuration information, where the second configuration information is used for beam failure management between the terminal and a configured cell;
performing radio link quality management between the terminal and the configured cell based on the first configuration information, and/or performing beam failure management between the terminal and the configured cell based on the second configuration information;
where the configured cell is configured with at least one transmission and reception point (TRP) associated with the first message.

In some embodiments, the first configuration information includes one or multiple radio link management resource sets;
where the one radio link management resource set or each of the multiple radio link management resource sets includes one or more pieces of the following information:
a monitoring resource set;
identifier information of TRP;
configuration information of a constant for radio resource management; or
a monitoring purpose of the radio link management resource set.

In some embodiments, the monitoring resource set includes one or more pieces of the following information:
identifier information of reference signal (RS);
identifier information of TRP; or
a monitoring purpose of RS.

In some embodiments, the first configuration information includes one or multiple radio link management resource sets;
the one radio link management resource set or each of the multiple radio link management resource sets is associated with one piece of given identifier information of TRP.

In some embodiments, in case that the monitoring purpose of the radio link management resource set and/or the monitoring purpose of the RS is a given purpose, the identifier information of TRP is given identifier information of TRP, or the identifier information of TRP is identifier information of TRP associated with the RS;
where the given purpose includes one or more of the following purposes:
for radio link monitoring; or
for beam failure detection.

In some embodiments, in case that the first configuration information includes one radio link management resource set, and the one radio link management resource set is used to perform failure detection on a reference signal (RS) for one TRP, the one radio link management resource set is associated with one TRP in one or more of the following modes:
each RS in the monitoring resource set included in the one radio link management resource set is associated with one piece of given identifier information of TRP;
the one radio link management resource set only includes one piece of identifier information of TRP; all RSs in the monitoring resource set included in the one radio link management resource set are associated with the one piece of identifier information of TRP; or
each RS in the monitoring resource set included in the one radio link management resource set is associated with one piece of identifier information of TRP, and the identifier information of TRP associated with each RS is the same; the identifier information of TRP associated with each RS is included in the monitoring resource set.

In some embodiments, in case that the first configuration information includes one radio link management resource set, and the one radio link management resource set is used to perform failure detection on reference signals (RSs) for multiple TRPs, the one radio link management resource set is associated with the multiple TRPs in the following mode:
each RS in the monitoring resource set included in the one radio link management resource set is associated with one piece of identifier information of TRP; and the identifier information of TRP associated with all RSs includes multiple types of identifier information of TRP.

In some embodiments, in case that the first configuration information includes multiple radio link management resource sets, and the multiple radio link management resource sets are used to perform failure detection on reference signals (RSs) for multiple TRPs, the multiple radio link management resource sets are associated with the multiple TRPs in one or more of the following modes:
each of the multiple radio link management resource sets is associated with one or more pieces of given identifier information of TRP; or
each of the multiple radio link management resource sets includes one or more pieces of given identifier information of TRP associated with the each of the multiple radio link management resource sets.

In some embodiments, the configuration information of the constant for radio resource management includes one or more pieces of the following information:
a first timer, used for controlling RLF;
a second timer, used for controlling reestablishment;
a first in-sync threshold, used for determining in-sync;
a first out-of-sync threshold, used for determining out-of-sync;
a first counter, used for counting out-of-sync indications; or
a second counter, used for counting in-sync indications.

In some embodiments, performing the radio link quality management between the terminal and the configured cell based on the first configuration information includes:
in case that an RLF occurs between the terminal and a first TRP, performing, by the terminal, at least one or more of the following operations:
triggering a radio resource control (RRC) reestablishment procedure;
reporting RLF information between the terminal and the first TRP through another TRP where no RLF occurs;
reporting RLF information between the terminal and the first TRP through another cell; or
reporting RLF information between the terminal and the first TRP through another node;
or, includes:
   in case that a cell RLF occurs, the terminal performs at least one or more of the following operations:
   triggering a radio resource control (RRC) reestablishment procedure;
   reporting cell RLF information through another TRP where no RLF occurs;
   reporting cell RLF information through another cell; or
   reporting cell RLF information through another node;
   or, includes:
      in a dual connectivity (DC) scenario, in case that an RLF is detected in a primary cell (PCell) or in a primary secondary cell (PSCell), the terminal transmits a master cell group (MCG) failure message or a secondary cell group (SCG) failure message;
      where the first TRP is one of the at least one TRP associated with the first message.

In some embodiments, in case that the first TRP is a given TRP, the RLF between the terminal and the first TRP includes one or more of the following situations:
the terminal determines that a failure occurs in a radio link between the terminal and the first TRP based on identifier information of the first TRP included in the one radio link management resource set; or
the terminal determines that a failure occurs in a radio link between the terminal and the first TRP based on identifier information of the first TRP included in one radio link management resource set in the multiple radio link management resource sets;
in case that the first TRP is a TRP other than the given TRP, the RLF between the terminal and the first TRP includes one or more of the following situations:
   the terminal determines that a failure occurs in a radio link between the terminal and the first TRP based on part or all of identifier information of the first TRP included in the one radio link management resource set; or
   the terminal determines that a failure occurs in a radio link between the terminal and the first TRP based on part or all of identifier information of the first TRP included in the multiple radio link management resource sets;
   the cell RLF includes one or more of the following situations:
      the terminal determines the cell RLF based on identifier information of a second TRP included in the one radio link management resource set;
      the terminal determines the cell RLF based on identifier information of a second TRP included in one radio link management resource set in the multiple radio link management resource sets;
      the terminal determines the cell RLF based on part or all of identifier information of a third TRP included in the one radio link management resource set;
      the terminal determines the cell RLF based on part or all of identifier information of a third TRP included in the multiple radio link management resource sets; or
      the terminal determines the cell RLF based on identifier information of a second TRP and all of identifier information of a third TRP included in the one radio link management resource set or the multiple radio link management resource sets;
      where any of the second TRP and the third TRP is one of the at least one TRP associated with the first message.

In some embodiments, the second configuration information includes a beam failure management resource set;
the beam failure management resource set includes at least one piece of candidate beam recovery configuration information; and the candidate beam recovery configuration information includes one or more pieces of the following information:
a candidate beam reference signal (RS) identifier; or
a TRP identifier.

An embodiment of the present application provides a network device, including a memory, a transceiver and a processor,
where the memory is used for storing a computer program, the transceiver is used for transmitting and receiving data under control of the processor, and the processor is used for reading the computer program in the memory and performing the following operations of:
transmitting a first message to a terminal, where the first message includes one or more pieces of the following configuration information:
first configuration information, where the first configuration information is used for radio link quality management between the terminal and a configured cell; or
second configuration information, where the second configuration information is used for beam failure management between the terminal and a configured cell;
where the configured cell is configured with at least one transmission and reception point (TRP) associated with the first message.

In some embodiments, the first configuration information includes one or multiple radio link management resource sets;
where the one radio link management resource set or each of the multiple radio link management resource sets includes one or more pieces of the following information:
a monitoring resource set;
identifier information of TRP;
configuration information of a constant for radio resource management; or
a monitoring purpose of the radio link management resource set.

In some embodiments, the monitoring resource set includes one or more pieces of the following information:
identifier information of reference signal (RS);
identifier information of TRP; or
a monitoring purpose of RS.

In some embodiments, the configuration information of the constant for radio resource management includes one or more pieces of the following information:
a first timer, used for controlling RLF;
a second timer, used for controlling reestablishment;
a first in-sync threshold, used for determining in-sync;
a first out-of-sync threshold, used for determining out-of-sync;
a first counter, used for counting out-of-sync indications; or
a second counter, used for counting in-sync indications.

An embodiment of the present application provides an apparatus for radio link management configuration, including:
an obtaining module, used for obtaining a first message transmitted from a network device, where the first message includes one or more pieces of the following configuration information:
first configuration information, where the first configuration information is used for radio link quality management between the terminal and a configured cell; or
second configuration information, where the second configuration information is used for beam failure management between the terminal and a configured cell;
a processing module, used for performing radio link quality management between the terminal and the configured cell based on the first configuration information, and/or performing beam failure management between the terminal and the configured cell based on the second configuration information;
where the configured cell is configured with at least one transmission and reception point (TRP) associated with the first message.

In some embodiments, the first configuration information includes one or multiple radio link management resource sets;
where the one radio link management resource set or each of the multiple radio link management resource sets includes one or more pieces of the following information:
a monitoring resource set;
identifier information of TRP;
configuration information of a constant for radio resource management; or
a monitoring purpose of the radio link management resource set.

In some embodiments, the monitoring resource set includes one or more pieces of the following information:
identifier information of reference signal (RS);
identifier information of TRP; or
a monitoring purpose of RS.

In some embodiments, the first configuration information includes one or multiple radio link management resource sets;
the one radio link management resource set or each of the multiple radio link management resource sets is associated with one piece of given identifier information of TRP.

In some embodiments, in case that the monitoring purpose of the radio link management resource set and/or the monitoring purpose of the RS is a given purpose, the identifier information of TRP is given identifier information of TRP, or the identifier information of TRP is identifier information of TRP associated with the RS;
where the given purpose includes one or more of the following purposes:
for radio link monitoring; or
for beam failure detection.

In some embodiments, in case that the first configuration information includes one radio link management resource set, and the one radio link management resource set is used to perform failure detection on a reference signal (RS) for one TRP, the one radio link management resource set is associated with one TRP in one or more of the following modes:
each RS in the monitoring resource set included in the one radio link management resource set is associated with one piece of given identifier information of TRP;
the one radio link management resource set only includes one piece of identifier information of TRP; all RSs in the monitoring resource set included in the one radio link management resource set are associated with the one piece of identifier information of TRP; or
each RS in the monitoring resource set included in the one radio link management resource set is associated with one piece of identifier information of TRP, and the identifier information of TRP associated with each RS is the same; the identifier information of TRP associated with each RS is included in the monitoring resource set.

In some embodiments, in case that the first configuration information includes one radio link management resource set, and the one radio link management resource set is used to perform failure detection on reference signals (RSs) for multiple TRPs, the one radio link management resource set is associated with the multiple TRPs in the following mode:
each RS in the monitoring resource set included in the one radio link management resource set is associated with one piece of identifier information of TRP; and the identifier information of TRP associated with all RSs includes multiple types of identifier information of TRP.

In some embodiments, in case that the first configuration information includes multiple radio link management resource sets, and the multiple radio link management resource sets are used to perform failure detection on reference signals (RSs) for multiple TRPs, the multiple radio link management resource sets are associated with the multiple TRPs in one or more of the following modes:
each of the multiple radio link management resource sets is associated with one or more pieces of given identifier information of TRP; or
each of the multiple radio link management resource sets includes one or more pieces of given identifier information of TRP associated with the each of the multiple radio link management resource sets.

In some embodiments, the configuration information of the constant for radio resource management includes one or more pieces of the following information:
a first timer, used for controlling RLF;
a second timer, used for controlling reestablishment;
a first in-sync threshold, used for determining in-sync;
a first out-of-sync threshold, used for determining out-of-sync;
a first counter, used for counting out-of-sync indications; or
a second counter, used for counting in-sync indications.

In some embodiments, performing the radio link quality management between the terminal and the configured cell based on the first configuration information includes:
in case that an RLF occurs between the terminal and a first TRP, performing, by the terminal, at least one or more of the following operations:
triggering a radio resource control (RRC) reestablishment procedure;
reporting RLF information between the terminal and the first TRP through another TRP where no RLF occurs;
reporting RLF information between the terminal and the first TRP through another cell; or
reporting RLF information between the terminal and the first TRP through another node;
or, includes:
   in case that a cell RLF occurs, the terminal performs at least one or more of the following operations:
   triggering a radio resource control (RRC) reestablishment procedure;
   reporting cell RLF information through another TRP where no RLF occurs;
   reporting cell RLF information through another cell; or
   reporting cell RLF information through another node;
   or, includes:
      in a dual connectivity (DC) scenario, in case that an RLF is detected in a primary cell (PCell) or in a primary secondary cell (PSCell), the terminal transmits a master cell group (MCG) failure message or a secondary cell group (SCG) failure message;
      where the first TRP is one of the at least one TRP associated with the first message.

In some embodiments, in case that the first TRP is a given TRP, the RLF between the terminal and the first TRP includes one or more of the following situations:
the terminal determines that a failure occurs in a radio link between the terminal and the first TRP based on identifier information of the first TRP included in the one radio link management resource set; or
the terminal determines that a failure occurs in a radio link between the terminal and the first TRP based on identifier information of the first TRP included in one radio link management resource set in the multiple radio link management resource sets;
in case that the first TRP is a TRP other than the given TRP, the RLF between the terminal and the first TRP includes one or more of the following situations:
   the terminal determines that a failure occurs in a radio link between the terminal and the first TRP based on part or all of identifier information of the first TRP included in the one radio link management resource set; or
   the terminal determines that a failure occurs in a radio link between the terminal and the first TRP based on part or all of identifier information of the first TRP included in the multiple radio link management resource sets;
   the cell RLF includes one or more of the following situations:
      the terminal determines the cell RLF based on identifier information of a second TRP included in the one radio link management resource set;
      the terminal determines the cell RLF based on identifier information of a second TRP included in one radio link management resource set in the multiple radio link management resource sets;
      the terminal determines the cell RLF based on part or all of identifier information of a third TRP included in the one radio link management resource set;
      the terminal determines the cell RLF based on part or all of identifier information of a third TRP included in the multiple radio link management resource sets; or
      the terminal determines the cell RLF based on identifier information of a second TRP and all of identifier information of a third TRP included in the one radio link management resource set or the multiple radio link management resource sets;
      where any of the second TRP and the third TRP is one of the at least one TRP associated with the first message.

In some embodiments, the second configuration information includes a beam failure management resource set;
the beam failure management resource set includes at least one piece of candidate beam recovery configuration information; and the candidate beam recovery configuration information includes one or more pieces of the following information:
a candidate beam reference signal (RS) identifier; or
a TRP identifier.

An embodiment of the present application provides an apparatus for radio link management configuration, including:
a transmitting module, used for transmitting a first message to a terminal, where the first message includes one or more pieces of the following configuration information:
first configuration information, where the first configuration information is used for radio link quality management between the terminal and a configured cell; or
second configuration information, where the second configuration information is used for beam failure management between the terminal and a configured cell;
where the configured cell is configured with at least one transmission and reception point (TRP) associated with the first message.

In some embodiments, the first configuration information includes one or multiple radio link management resource sets;
where the one radio link management resource set or each of the multiple radio link management resource sets includes one or more pieces of the following information:
a monitoring resource set;
identifier information of TRP;
configuration information of a constant for radio resource management; or
a monitoring purpose of the radio link management resource set.

In some embodiments, the monitoring resource set includes one or more pieces of the following information:
identifier information of reference signal (RS);
identifier information of TRP; or
a monitoring purpose of the RS.

In some embodiments, the configuration information of the constant for radio resource management includes one or more pieces of the following information:
a first timer, used for controlling RLF;
a second timer, used for controlling reestablishment;
a first in-sync threshold, used for determining in-sync;
a first out-of-sync threshold, used for determining out-of-sync;
a first counter, used for counting out-of-sync indications; or
a second counter, used for counting in-sync indications.

An embodiment of the present application further provides a processor readable storage medium storing a computer program that causes a processor to perform the method for radio link management configuration performed by the terminal or the network device.

An embodiment of the present application further provides a computer readable storage medium storing a computer program that causes a computer to perform the method for radio link management configuration performed by the terminal or the network device.

An embodiment of the present application further provides a communication device readable storage medium storing a computer program that causes a communication device to perform the method for radio link management configuration performed by the terminal or the network device.

An embodiment of the present application further provides a chip product readable storage medium storing a computer program that causes a chip product to perform the method for radio link management configuration performed by the terminal or the network device.

In the methods and apparatuses for radio link management configuration, and the storage medium provided by the embodiments of the present application, in case that the terminal is configured with multiple TRPs, the network device configures the first configuration information and/or the second configuration information for the terminal, and then the terminal performs radio link management based on the received configuration information, which avoids unnecessary data interruption.

### BRIEF DESCRIPTION OF THE DRAWINGS

In order to illustrate the solutions disclosed in embodiments of the present application more clearly, drawings used in the description of the embodiments are briefly described below. The drawings in the following description are only some embodiments of the present application, and other drawings may be obtained according to these drawings without any creative work for those skilled in the art.
FIG. 1 is a first schematic flowchart of a method for radio link management configuration according to an embodiment of the present application;
FIG. 2 is a second schematic flowchart of a method for radio link management configuration according to an embodiment of the present application;
FIG. 3 is a schematic structural diagram of a terminal according to an embodiment of the present application;
FIG. 4 is a schematic structural diagram of a network device according to an embodiment of the present application;
FIG. 5 is a first schematic structural diagram of an apparatus for radio link management configuration according to an embodiment of the present application; and
FIG. 6 is a second schematic structural diagram of an apparatus for radio link management configuration according to an embodiment of the present application.

### DETAILED DESCRIPTION

For a traditional inter-cell beam management (ICBM) scenario, a network may configure associated configuration of one or more additional transmission and reception points (aTRPs) (different in physical cell identifier (PCI) of a primary transmission and reception point (pTRP)) for a terminal/user equipment (UE). The terminal performs associated measurements and reports based on the configuration from the network. The network transmits an indication to the terminal to activate a transmission configuration indication (TCI) of a corresponding transmission and reception point (TRP). After successful activation, data transmission is performed on the corresponding TRP. The UE only simultaneously performs uplink (UL)/downlink (DL) data transmission with one TRP.

In a traditional multi-transmission and reception point (mTRP) scenario, a UE may perform downlink data transmission with two TRPs simultaneously, but the UE may only perform uplink data transmission with one TRP simultaneously. A network may activate TCI of two TRPs simultaneously, so that the UE and the network may perform downlink data transmission on TRP1 and TRP2 simultaneously.

In a radio link monitoring (RLM) mechanism of R15/R16, a base station may configure some measurement configurations for a UE to perform an RLM measurement, such as a measurement reference signal (RS) configuration. After receiving the measurement configuration, the UE performs the RLM measurement based on the measurement configuration.

The mechanism of RLM measurement is to monitor by the physical layer of the UE. In case that radio link quality of the measurement signals in all configured radio link management resource sets is lower than an RLM out-of-sync threshold (rlmOutOfSyncThreshold) Qₒᵤₜ, the physical layer may indicate out-of-sync indication to a higher layer. In case that the higher layer receives the out-of-sync indication from the physical layer, if a T310 timer is stopped, an N310 counter is started to accumulate the number of continuously received out-of-sync indications. In case that the N310 counter reaches a maximum value, the T310 timer is started for timing. In case that the T310 timer expires, the UE determines that occurrence of a radio link failure (RLF) has been detected.

In case that the physical layer monitors that the radio link quality of any measurement signal in the configured radio link management resource set is higher than an RLM in-sync threshold (rlmInSyncThreshold) Qᵢₙ, the physical layer indicates in-sync to the higher layer. After the higher layer receives the in-sync indication, if the T310 timer is running, the N311 counter is started to accumulate the number of continuously received in-sync indications. In case that the N311 counter value reaches the maximum value, the T310 timer is stopped, the UE continues to perform the RLM measurement, and the UE does not detect the radio link failure. In case that the N310 counter is counting, if the in-sync indication is received from a lower layer, the N310 counter is reset. In case that the N311 counter is counting, if the out-of-sync indication is received from the lower layer, the N311 counter is reset.

For the ICBM scenario, in case that an RLF is detected in a pTRP, a terminal and a network are transmitting data in an aTRP, and a link quality of the aTRP is good, the terminal may still be triggered to perform a radio resource control (RRC) reestablishment, which causes an unnecessary data interruption. For the mTRP scenario, in case that the terminal and the network are transmitting data on TRP1 and TRP2 simultaneously, a link quality of the TRP2 cannot be validly reflected by only performing RLM for TRP1, which may trigger a reestablishment while the link quality of the TRP2 is good, and causes an unnecessary data interruption.

In response to the above problems, the embodiments of the present application provide methods and apparatuses for radio link management configuration, and a storage medium. In case that the terminal is configured with multiple TRPs, the network device configures first configuration information and/or second configuration information for the terminal, and the terminal performs radio link management based on the received configuration information, which avoids unnecessary data interruption.

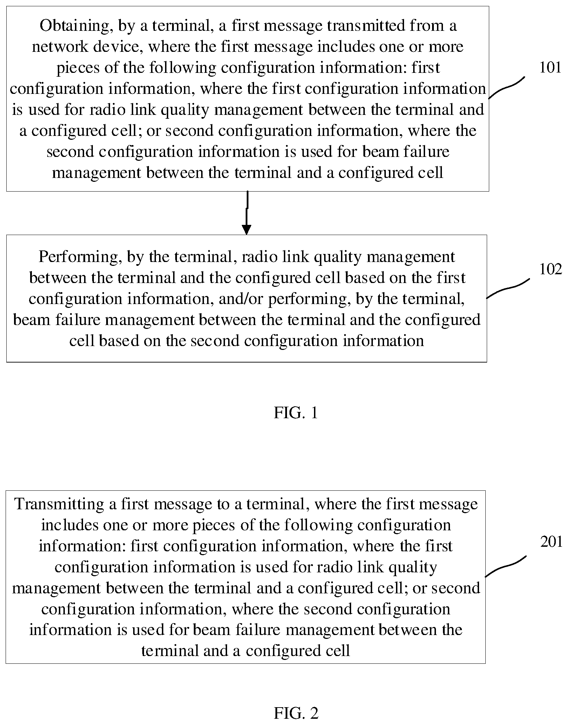

FIG. 1 is a first schematic flowchart of a method for radio link management configuration according to an embodiment of the present application. As shown in FIG. 1, the present application provides a method for radio link management configuration, performed by a terminal, such as a mobile phone, etc. The method includes the steps as follows.

Step 101: obtaining, by the terminal, a first message transmitted from a network device, where the first message includes one or more pieces of the following configuration information:
first configuration information, where the first configuration information is used for radio link quality management between the terminal and a configured cell; or
second configuration information, where the second configuration information is used for beam failure management between the terminal and a configured cell;
where the configured cell is configured with at least one TRP associated with the first message.

In an embodiment, the radio link quality management includes RLM and beam failure detection. The beam failure management includes beam failure recovery.

The TRPs in embodiments of the present application include pTRP and aTRP in the ICBM scenario, and include TRP1, TRP2, TRP3, etc. in the mTRP scenario.

Step 102: performing, by the terminal, radio link quality management between the terminal and the configured cell based on the first configuration information, and/or performing, by the terminal, beam failure management between the terminal and the configured cell based on the second configuration information.

In an embodiment, after obtaining the first configuration information and/or the second configuration information, the terminal performs the radio link quality management between the terminal and the configured cell based on the first configuration information.

For example, the terminal performs RLM between the terminal and the configured cell based on the first configuration information, or the terminal performs beam failure detection between the terminal and the configured cell based on the first configuration information, or the terminal simultaneously performs RLM and beam failure detection between the terminal and the configured cell based on the first configuration information.

In case that a beam failure is detected, the terminal performs beam failure recovery between the terminal and the configured cell based on the second configuration information.

In the method for radio link management configuration provided by the embodiments of the present application, in case that multiple TRPs are configured for the terminal, the network device configures the first configuration information for the terminal, and then the terminal performs radio link management based on the received configuration information, which avoids unnecessary data interruption.

In some embodiments, the first configuration information includes one or multiple radio link management resource sets;
where the one radio link management resource set or each of the multiple radio link management resource sets includes one or more pieces of the following information:
a monitoring resource set;
identifier information of a TRP;
configuration information of a constant for radio resource management; or
a monitoring purpose of the radio link management resource set.

In an embodiment, a radio link management resource set is associated with a TRP in an explicit manner.

For example, in case that the first configuration information includes one radio link management resource set (denoted as radio link management resource set 1), the radio link management resource set 1 includes identifier information of TRP1, and then the radio link management resource set 1 is associated with TRP1.

For example, in case that the first configuration information includes two radio link management resource sets (denoted as radio link management resource set 1 and radio link management resource set 2), the radio link management resource set 1 includes identifier information of TRP1, and then the radio link management resource set 1 is associated with TRP1; and the radio link management resource set 2 includes identifier information of TRP2 and TRP3, and then the radio link management resource set 2 is associated with TRP2 and TRP3.

The configuration information of the constant for radio resource management may include parameters required for performing radio link management, for example, a T310 timer for controlling RLF, a T311 timer for controlling reestablishment, an in-sync threshold Qᵢₙ for determining in-sync, an out-of-sync threshold Qₒᵤₜ for determining out-of-sync, etc.

The configuration information of the constant for radio resource management may be configured in a radio link management resource set. A radio link management resource set may do not include the configuration information of the constant for radio resource management. The terminal may obtain the parameters required for performing radio link management in other ways, for example, by incremental configuration, that is, the network device configures the parameters for the terminal again or separately if the terminal lacks any parameters.

The monitoring resource set may include identifier information of a reference signal (RS) required for radio link management. The monitoring resource set may be configured in a radio link management resource set. A radio link management resource set may do not include the configuration information of the constant for radio resource management. The terminal may obtain the RS required for performing radio link management in other ways, for example, by incremental configuration, that is, the network device configures the RS for the terminal again or separately if the terminal lacks any RS, or in case that the terminal does not receive the monitoring resource set, the terminal recognizes which RS should be measured by default.

In the method for radio link management configuration provided by the embodiments of the present application, in case that the terminal is configured with multiple TRPs, the network device may configure the first configuration information for the terminal more flexibly in an explicit manner, and then the terminal performs radio link management based on the received configuration information, which avoids unnecessary data interruption.

In some embodiments, the monitoring resource set includes one or more pieces of the following information:
identifier information of RS;
identifier information of TRP; or
a monitoring purpose of RS.

In an embodiment, in one case, only the radio link management resource set may include identifier information of TRP. In this case, all TRPs associated with the RS in the radio link management resource set are TRPs corresponding to the identifier information of TRP.

For example, the radio link management resource set 1 includes identifier information of TRP1, and the monitoring resource set in the radio link management resource set 1 also includes an identifier of RS1, an identifier of RS2 and an identifier of RS3, then the radio link management resource set 1 is associated with TRP1, that is, all of RS1, RS2 and RS3 are associated with TRP1.

In another case, only the monitoring resource set may include identifier information of TRP, and each RS in the monitoring resource set corresponds to (is associated with) a TRP. In the monitoring resource set, RS and TRP may be associated in the form of a table, and the TRP corresponding to (associated with) each RS in the monitoring resource set may be the same TRP. For example, in Table 1, all of RS1, RS2 and RS3 are associated with TRP1.

**Table 1**

| Identifiers of RS | Identifiers of TRP |
|---|---|
| RS1 | TRP1 |
| RS2 | TRP1 |
| RS3 | TRP1 |

The TRPs corresponding to (associated with) respective RSs in the monitoring resource set may also be different TRPs. For example, as shown in Table 2, RS1 is associated with TRP1, and both RS2 and RS3 are associated with TRP2.

**Table 2**

| Identifiers of RS | Identifiers of TRP |
|---|---|
| RS1 | TRP1 |
| RS2 | TRP2 |
| RS3 | TRP2 |

In another case, both the radio link management resource set and the monitoring resource set may include the identifier information of TRP. In this case, the identifier information of TRP included in the radio link management resource set is the same as the identifier information of TRP included in the monitoring resource set, which indicates that the radio link management resource set is associated with one TRP, that is, each RS in the monitoring resource set is associated with the same TRP.

For example, the radio link management resource set 1 includes identifier information of TRP1, and the monitoring resource set in the radio link management resource set 1 is associated with the RS and TRP in the form of Table 1, and all of RS1, RS2 and RS3 are associated with TRP1.

In an embodiment, the monitoring purpose of the radio link management resource set may be used for performing radio link monitoring (RLM), or may be used for performing beam failure detection, or may be used for performing radio link monitoring and beam failure detection simultaneously.

In one case, the radio link management resource set includes the monitoring purpose of the radio link management resource set, and the monitoring resource set does not include the monitoring purpose of the RS. In this case, the monitoring purpose of each RS in the monitoring resource set is the same as the monitoring purpose of the radio link management resource set.

For example, the monitoring purpose of radio link management resource set 1 included in radio link management resource set 1 is for RLM, and the monitoring resource set in the radio link management resource set 1 includes the identifier of RS1, the identifier of RS2 and the identifier of RS3, then the monitoring purposes of RS1, RS2 and RS3 are all for RLM.

In another case, the radio link management resource set does not include the monitoring purpose of the radio link management resource set, and the monitoring resource set includes the monitoring purpose of RS. In this case, the monitoring purposes of the RSs in the monitoring resource set may be the same.

For example, the monitoring resource set in radio link management resource set 1 includes the identifier of RS1, the identifier of RS2 and the identifier of RS3, and all of the monitoring purposes of RS1, RS2 and RS3 are for RLM.

The monitoring purposes of the RSs in the monitoring resource set may also be the same.

For example, the monitoring resource set in radio link management resource set 1 includes the identifier of RS1, the identifier of RS2 and the identifier of RS3, both the monitoring purposes of RS1 and RS2 are for RLM, and the monitoring purpose of RS3 is for beam failure detection.

In another case, the radio link management resource set includes the monitoring purpose of the radio link management resource set, and the monitoring resource set also includes the monitoring purpose of the RS. In this case, the monitoring purposes of the RSs in the monitoring resource set are the same, and are also the same as the monitoring purpose of the radio link management resource set.

In the method for radio link management configuration provided by the embodiments of the present application, in case that the terminal is configured with multiple TRPs, the network device may configure the first configuration information for the terminal more flexibly in an explicit manner, and then the terminal performs radio link management based on the received configuration information, which avoids unnecessary data interruption.

In some embodiments, the first configuration information includes one or multiple radio link management resource sets;
the one radio link management resource set or each of the multiple radio link management resource sets is associated with one piece of given identifier information of TRP.

In an embodiment, the radio link management resource set is associated with the TRP in an implicit manner.

For example, in case that the first configuration information includes only one radio link management resource set (radio link management resource set 1), and the radio link management resource set 1 is associated with the identifier information of TRP1 by default, the network device does not configure the identifier information of TRP in the radio link management resource set 1. After the terminal obtains the radio link management resource set 1, the radio link management resource set 1 is associated with TRP1 by default.

For another example, in case that the first configuration information includes two radio link management resource sets (denoted as radio link management resource set 1 and radio link management resource set 2), and the radio link management resource set 1 is associated with the identifier information of TRP1 and the radio link management resource set 2 is associated with the identifier information of TRP2 by default, the network device does not configure the identifier information of TRP in the radio link management resource set 1, nor does the network device configure the identifier information of TRP in the radio link management resource set 2. After the terminal obtains the radio link management resource set 1, the radio link management resource set 1 is associated with TRP1 by default, and the radio link management resource set 2 is associated with TRP2 by default.

In the method for radio link management configuration provided by the embodiments of the present application, in case that the terminal is configured with multiple TRPs, the network device may implicitly configure the first configuration information for the terminal and save more signaling resources, and then the terminal performs radio link management based on the received configuration information, which avoids unnecessary data interruption.

In some embodiments, in case that the monitoring purpose of the radio link management resource set and/or the monitoring purpose of the RS is a given purpose, the identifier information of TRP is given identifier information of TRP, or the identifier information of TRP is identifier information of TRP associated with the RS;
the given purpose includes one or more of the following purposes:
for radio link monitoring; or
for beam failure detection.

In an embodiment, the radio link management resource set is associated with the TRP in an implicit manner.

For example, in case that the monitoring purpose of the radio link management resource set is for RLM, the radio link management resource set is associated with TRP1 by default. In case that the monitoring purpose of the radio link management resource set is for beam failure detection, the radio link management resource set is associated with TRP2 by default. In case that the monitoring purpose of the radio link management resource set is for RLM and beam failure detection, the radio link management resource set is associated with TRP3 by default.

For another example, in case that the monitoring purpose of RS1 is for RLM, RS1 is associated with TRP1 by default and in case that the monitoring purpose of RS1 is for beam failure detection, RS1 is associated with TRP2 by default.

In the method for radio link management configuration provided by the embodiments of the present application, in case that the terminal is configured with multiple TRPs, the network device may implicitly configure the first configuration information for the terminal and save more signaling resources, and then the terminal performs radio link management based on the received configuration information, which avoids unnecessary data interruption.

In some embodiments, in case that the first configuration information includes one radio link management resource set, and the one radio link management resource set is used to perform failure detection on an RS for one TRP, the one radio link management resource set is associated with the one TRP in one or more of the following modes:
each RS in the monitoring resource set included in the one radio link management resource set is associated with one piece of given identifier information of TRP;
the one radio link management resource set only includes one piece of identifier information of TRP, and the RSs in the monitoring resource set included in the one radio link management resource set are associated with the one piece of identifier information of TRP; or
each RS in the monitoring resource set included in the one radio link management resource set is associated with one piece of identifier information of TRP, and the identifier information of TRP associated with each RS is the same; and the identifier information of TRP associated with each RS is included in the monitoring resource set.

In an embodiment, in case that the first configuration information includes one radio link management resource set, and the one radio link management resource set is used to perform failure detection on an RS for one TRP, if the terminal is indicated implicitly, each RS in the monitoring resource set included in the one radio link management resource set is associated with a given (default) identifier information of TRP.

If the terminal is indicated explicitly, only the radio link management resource set may include one piece of identifier information of TRP, and the monitoring resource set does not include the identifier information of TRP. In this case, all the RSs in the monitoring resource set are associated with the identifier information of TRP in the radio link management resource set.

If the terminal is indicated explicitly, only the monitoring resource set may include the identifier information of TRP, and the radio link management resource set does include the identifier information of TRP. In this case, each RS in the monitoring resource set corresponds to (is associated with) one TRP. In the monitoring resource set, RSs and TRPs may be associated in the form of a table, and the TRPs corresponding to (associated with) respective RSs in the monitoring resource set are all the same TRP. For example, in Table 1, all of RS1, RS2 and RS3 are associated with TRP1.

In the method for radio link management configuration provided by the embodiments of the present application, in case that the terminal is configured with multiple TRPs, the network device configures the first configuration information for the terminal, and then the terminal performs radio link management based on the received configuration information, which avoids unnecessary data interruption.

In some embodiments, in case that the first configuration information includes one radio link management resource set, and the one radio link management resource set is used to perform failure detection on RSs for multiple TRPs, the one radio link management resource set is associated with the multiple TRPs in the following mode:
each RS in the monitoring resource set included in the one radio link management resource set is associated with one piece of identifier information of TRP; and the identifier information of TRP associated with all RSs includes multiple types of identifier information of TRP.

In an embodiment, in case that the first configuration information includes one radio link management resource set, and the one radio link management resource set is used to perform failure detection on RSs for multiple TRPs, the terminal is indicated explicitly, that is, each RS in the monitoring resource set is associated with the one piece of identifier information of TRP, and each RS in the monitoring resource set corresponds to (is associated with) a different TRP. For example, in Table 2, RS1 is associated with TRP1, and both RS2 and RS3 are associated with TRP2.

In the method for radio link management configuration provided by the embodiments of the present application, in case that the terminal is configured with multiple TRPs, the network device configures the first configuration information for the terminal, and then the terminal performs radio link management based on the received configuration information, which avoids unnecessary data interruption.

In some embodiments, in case that the first configuration information includes multiple radio link management resource sets, and the multiple radio link management resource sets are used to perform failure detection on RSs for multiple TRPs, the multiple radio link management resource sets are associated with the multiple TRPs in one or more of the following modes:
each of the multiple radio link management resource sets is associated with one or more pieces of given identifier information of TRP; or
each of the multiple radio link management resource sets includes one or more pieces of identifier information of TRP associated with the each of the multiple radio link management resource sets.

In an embodiment, in case that the first configuration information includes multiple radio link management resource sets, the TRP associated with each radio link management resource set may be the same.

For example, the first configuration information includes two radio link management resource sets (denoted as radio link management resource set 1 and radio link management resource set 2), and both the radio link management resource set 1 and the radio link management resource set 2 are associated with TRP1.

The TRP associated with each radio link management resource set may be different.

For example, the first configuration information includes two radio link management resource sets (denoted as radio link management resource set 1 and radio link management resource set 2), the radio link management resource set 1 is associated with TRP1, and the radio link management resource set 2 is associated with TRP2.

For the manner of associating each radio link management resource set in the multiple radio link management resource sets with the TRP, the radio link management resource set may be associated with the TRP in an implicit or explicit manner.

For example, in case that the first configuration information includes two radio link management resource sets (denoted as radio link management resource set 1 and radio link management resource set 2), the radio link management resource set 1 is associated with the identifier information of TRP1 by default, and the radio link management resource set 2 is associated with the identifier information of TRP2 by default, the network device does not configure the identifier information of TRP1 in the radio link management resource set 1, and does not configure the identifier information of TRP2 in the radio link management resource set 2. After the terminal obtains the radio link management resource set 1 and the radio link management resource set 2, the radio link management resource set 1 is associated with TRP1 by default, and the radio link management resource set 2 is associated with TRP2 by default.

If the terminal is indicated explicitly, only the radio link management resource set may include one piece of identifier information of TRP, and the monitoring resource set does not include the identifier information of TRP. In this case, all the RSs in the monitoring resource set are associated with the identifier information of TRP in the radio link management resource set.

For example, the first configuration information includes two radio link management resource sets (denoted as radio link management resource set 1 and radio link management resource set 2), the radio link management resource set 1 includes identifier information of TRP1, and radio link management resource set 2 includes identifier information of TRP2. After the terminal obtains the radio link management resource set 1 and the radio link management resource set 2, the radio link management resource set 1 is associated with TRP1, and the radio link management resource set 2 is associated with TRP2.

In the method for radio link management configuration provided by the embodiments of the present application, in case that the terminal is configured with multiple TRPs, the network device configures the first configuration information for the terminal, and then the terminal performs radio link management based on the received configuration information, which avoids unnecessary data interruption.

In some embodiments, the configuration information of the constant for radio resource management includes one or more pieces of the following information:
a first timer, used for controlling RLF;
a second timer, used for controlling reestablishment;
a first in-sync threshold, used for determining in-sync;
a first out-of-sync threshold, used for determining out-of-sync;
a first counter, used for counting out-of-sync indications; or
a second counter, used for counting in-sync indications.

In an embodiment, the first timer may be a legacy T310 timer or an additionally extended T310 timer.

The second timer may be a legacy T311 timer or an additionally extended T311 timer.

The first in-sync threshold may be a legacy Qᵢₙ, an additionally extended Qᵢₙ, etc.

The first out-of-sync threshold may be a legacy Qₒᵤₜ, an additionally extended Qₒᵤₜ, etc.

The first counter may be a legacy N310 counter or an additionally extended N310 counter.

The second counter may be a legacy N311 counter or an additionally extended N311 counter.

In case that the first configuration information includes multiple radio link management resource sets, the configuration information of the constant for radio resource management in each radio link management resource set may be the same or different.

In the method for radio link management configuration provided by the embodiments of the present application, in case that the terminal is configured with multiple TRPs, the network device configures the first configuration information for the terminal, and then the terminal performs radio link management based on the received configuration information, which avoids unnecessary data interruption.

In some embodiments, performing, by the terminal, the radio link quality management between the terminal and the configured cell based on the first configuration information includes:
in case that an RLF occurs between the terminal and a first TRP, performing, by the terminal, at least one or more of the following operations:
triggering an RRC reestablishment procedure;
reporting RLF information between the terminal and the first TRP through another TRP where no RLF occurs;
reporting RLF information between the terminal and the first TRP through another cell; or
reporting RLF information between the terminal and the first TRP through another node;
or, includes:
   in case that a cell RLF occurs, performing, by the terminal, at least one or more of the following operations:
   triggering an RRC reestablishment procedure;
   reporting cell RLF information through another TRP where no RLF occurs;
   reporting cell RLF information through another cell; or
   reporting cell RLF information through another node;
   or, includes:
      in a dual connectivity (DC) scenario, in case that an RLF is detected in a primary cell (PCell) or in a primary secondary cell (PSCell), transmitting, by the terminal, a master cell group (MCG) failure message or a secondary cell group (SCG) failure message;
      where the first TRP is one of the at least one TRP associated with the first message.

In an embodiment, in case that the RLF between the terminal and the first TRP is detected, the terminal may trigger the RRC reestablishment procedure.

The terminal may also report RLF information between the terminal and the first TRP through another TRP where no RLF occurs.

The terminal may also report RLF information between the terminal and the first TRP through another cell.

The terminal may also report RLF information between the terminal and the first TRP through another node.

In the ICBM scenario, the first TRP may be a pTRP or an aTRP.

In the mTRP scenario, the first TRP may be TRP1 or other TRPs other than TRP1 (e.g., TRP2, TRP3, TRP4, etc.).

For example, in the ICBM scenario, in case that RLF is detected in a pTRP, the terminal may trigger RRC reestablishment. The terminal may also transmit information of RLF in the pTRP through an aTRP where no RLF occurs.

For example, in the ICBM scenario, in case that an RLF is detected in a certain aTRP, the terminal may trigger RRC reestablishment. The terminal may also transmit information of RLF in the aTRP through a pTRP where no RLF occurs. The terminal may also transmit information of RLF in the aTRP through another aTRP where no RLF occurs.

For example, in the mTRP scenario, TRP1 and TRP2 perform data transmission simultaneously, and in case that RLF in TRP1 is detected, the terminal may trigger RRC reestablishment. The terminal may also transmit information of RLF in TRP1 through TRP2 where no RLF occurs.

In case that a cell RLF is detected, the terminal may trigger the RRC reestablishment procedure.

The terminal may also report the cell RLF information through another TRP where no RLF occurs.

The terminal may also report the cell RLF through another cell.

The terminal may also report the cell RLF through another node.

In the DC scenario, if RLM is performed for a PCell or a PSCell, in case that an RLF is detected, it may trigger the transmission of an MCG failure information message or an SCG failure information message instead of triggering a reestablishment.

In the method for radio link management configuration provided by the embodiments of the present application, in case that the terminal is configured with multiple TRPs, the network device configures the first configuration information for the terminal, and then the terminal performs radio link management based on the received configuration information, which avoids unnecessary data interruption.

In some embodiments, in case that the first TRP is a given TRP, the RLF between the terminal and the first TRP includes one or more of the following situations:
the terminal determines that a failure occurs in a radio link between the terminal and the first TRP based on identifier information of the first TRP included in the one radio link management resource set; or
the terminal determines that a failure occurs in a radio link between the terminal and the first TRP based on identifier information of the first TRP included in one radio link management resource set among the multiple radio link management resource sets;
in case that the first TRP is a TRP other than the given TRP, the RLF between the terminal and the first TRP includes one or more of the following situations:
   the terminal determines that a failure occurs in a radio link between the terminal and the first TRP based on part or all of identifier information of the first TRP included in the one radio link management resource set; or
   the terminal determines that a failure occurs in a radio link between the terminal and the first TRP based on part or all of identifier information of the first TRP included in the multiple radio link management resource sets;
   the cell RLF includes one or more of the following situations:
      the terminal determines the cell RLF based on identifier information of a second TRP included in the one radio link management resource set;
      the terminal determines the cell RLF based on identifier information of a second TRP included in one radio link management resource set among the multiple radio link management resource sets;
      the terminal determines the cell RLF based on part or all of identifier information of a third TRP included in the one radio link management resource set;
      the terminal determines the cell RLF based on part or all of identifier information of a third TRP included in the multiple radio link management resource sets; or
      the terminal determines the cell RLF based on identifier information of a second TRP and all of identifier information of a third TRP included in the one radio link management resource set or the multiple radio link management resource sets;
      where any of the second TRP and the third TRP is one of the at least one TRP associated with the first message.

In an embodiment, for RLF between the terminal and the TRP, in case that one radio link management resource set is configured, and the one radio link management resource set is used to perform failure detection on the RS for the first TRP, an RLF is detected based on the one radio link management resource set, and then the RLF between the terminal and the first TRP is determined.

In an embodiment, for RLF between the terminal and the TRP, in case that multiple radio link management resource sets are configured, and one of the multiple radio link management resource sets is used to perform failure detection on the RS for the first TRP, an RLF is detected based on the one radio link management resource set, and then the RLF between the terminal and the first TRP is determined.

In an embodiment of the present application, in the ICBM scenario, the first TRP may be a pTRP or an aTRP. In the mTRP scenario, the first TRP may be TRP1 or a TRP other than TRP1.

In an embodiment, for cell RLF, in case that one radio link management resource set is configured, and the one radio link management resource set is used to perform failure detection on an RS for a TRP, an RLF is detected based on the one radio link management resource set, and then the cell RLF is determined.

In an embodiment, for cell RLF, in case that one radio link management resource set is configured and the one radio link management resource set is used to perform failure detection on RSs for multiple TRPs, an RLF may be detected in one TRP based on the one radio link management resource set, and then the cell RLF is determined. The one TRP may be any one TRP or a specified one TRP. Alternatively, RLF may be detected in multiple (not including all) TRPs based on the one radio link management resource set, and then the cell RLF is determined. The multiple TRPs may be any multiple TRPs or a specified multiple TRPs. Alternatively, RLF may be detected in all TRPs based on the one radio link management resource set, and then the cell RLF is determined.

In case that multiple radio link management resource sets are configured and the multiple radio link management resource sets are used to perform failure detection on RSs for multiple TRPs, the cell RLF may be determined in case that RLF is detected in one TRP, in multiple TRPs, or in all TRPs.

In an embodiment of the present application, in the ICBM scenario, the second TRP refers to a pTRP, and the third TRP refers to an aTRP. In the mTRP scenario, the second TRP refers to TRP1, and the third TRP refers to TRPs other than TRP1.

In the method for radio link management configuration provided by the embodiments of the present application, in case that the terminal is configured with multiple TRPs, the network device configures the first configuration information for the terminal, and then the terminal performs RLM based on the received configuration information. In case that an RLF is detected, the terminal performs RRC reestablishment, selects other TRPs, reports failure information, etc., which avoids unnecessary data interruption.

In some embodiments, the second configuration information includes one beam failure management resource set;
the one beam failure management resource set includes at least one piece of candidate beam recovery configuration information; and the candidate beam recovery configuration information includes one or more pieces of the following information:
a candidate beam RS identifier; or
a TRP identifier.

In an embodiment, the second configuration information includes one beam failure management resource set;
the one beam failure management resource set includes at least one piece of candidate beam recovery configuration information; and the candidate beam recovery configuration information includes one or more pieces of the following information:
the candidate beam RS identifier; or
the TRP identifier.

After obtaining the second configuration information, the terminal performs candidate beam measurement based on the second configuration information. In case that a beam failure is detected, the terminal may select a candidate beam with better quality to perform beam failure recovery based on a candidate beam measurement result.

For example, in the ICBM scenario, in case that a beam failure is detected in a pTRP, if there is a certain aTRP where no beam failure occurs and with good beam quality, the terminal may perform beam failure recovery based on a candidate beam of the certain aTRP where no beam failure occurs.

For example, in the mTRP scenario, TRP1 and TRP2 perform data transmission simultaneously. In case that a beam failure is detected in TRP1 and/or TRP2, the terminal may perform beam failure recovery on the beam of the candidate TRP with good signal quality.

In the method for radio link management configuration provided by the embodiments of the present application, in case that the terminal is configured with multiple TRPs, the network device configures the second configuration information for the terminal, and then the terminal performs beam failure detection based on the received configuration information. In case that a beam failure is detected, the terminal performs beam failure recovery, which avoids unnecessary data interruption.

The method in the above embodiments is further described below with three examples.

Example 1: The first configuration information is configured with only one radio link management resource set, and RLM is performed on the RS for only one of the TRPs.

Step 1a: in the mTRP scenario, the UE receives downlink data from two TRPs simultaneously.

Step 1b: in the ICBM scenario, the UE and the network perform data transmission on one TRP.

Step 2a: the network configures one radio link management resource set for the UE, in which all RSs configured by the network are associated with TRP1.

Step 2a-1: the network indicates that all configured RSs are associated with TRP1 in an implicit manner, that is, the network does not configure an explicit indication, and the default is that all configured RSs are associated with TRP1; or it is indicated in the monitoring purpose that in case that the monitoring purpose is for RLM and/or beam failure detection, all of the indicated RSs are associated with TRP1.

Step 2a-2: The network indicates that all configured RSs are associated with TRP1 in an explicit manner, that is, the configuration includes 1 bit of indication information.

Step 2a-3: The network explicitly indicates that all configured RSs are associated with TRP1, that is, the configuration includes identifier information of TRP, such as PCI, and all identifier information of TRP is set to PCI of the TRP1 (for example, all identifier information of TRP for monitoring purposes of RLM and/or beam failure detection may be set to the PCI of the TRP1). In addition to PCI, the identifier information of TRP may also be in other forms, such as the radio link management resource set identifier (RLMRSSetId), the beam failure detection resource set identifier (BFDRSSetId), etc.

Step 2a-4: in case that configuration of the radio link management resource set includes identifier information of TRP, it is necessary to indicate at this PCI that in case that the monitoring purpose is for RLM and/or beam failure detection, this PCI is ignored or not configured, or the PCI needs to be configured as the PCI of the TRP1.

Step 2b: the network configures one radio link management resource set for the UE, in which all RSs configured by the network are associated with pTRP.

Step 2b-1: the network indicates that all configured RSs are associated with pTRP in an implicit manner, that is, the network does not configure an explicit indication, and the default is that all configured RSs are associated with pTRP; or it is indicated at the monitoring purpose that in case that the monitoring purpose is for RLM and/or beam failure detection, the indicated RSs are all associated with pTRP.

Step 2b-2: the network indicates that all configured RSs are associated with pTRP in an explicit manner, that is, the configuration includes 1 bit of indication information.

Step 2b-3: the network explicitly indicates that all configured RSs are associated with pTRP, that is, the configuration includes identifier information of TRP, such as PCI, and all identifier information of TRP is set as the PCI of pTRP (for example, all identifier information of TRP for monitoring purposes of RLM and/or beam failure detection may be set as the PCI of the pTRP), where identifier information of TRP may be in other forms besides PCI, such as RLMRSSetId, BFDRSSetId, etc.

Step 2b-4: in case that configuration of the radio link management resource set already includes the identifier information of TRP, it is necessary to indicate at this PCI that in case that the monitoring purpose is for RLM and/or beam failure detection, this PCI is ignored or not configured, or the PCI needs to be configured as the PCI of the pTRP.

Step 3a/3b: The network simultaneously configures the radio link monitoring in-sync and out-of-sync threshold (*rlmInSyncOutOfSyncThreshold*) to the UE. The configured *rlmInSyncOutOfSyncThreshold* may be the legacy *rlmInSyncOutOfSyncThreshold*, or the additionally extended *rlmInSyncOutOfSyncThreshold*. The additionally extended *rlmInSyncOutOfSyncThreshold* may be n2, corresponding to a value of 2, which may correspond to Qₒᵤₜ and Qᵢₙ values different from the legacy *rlmInSyncOutOfSyncThreshold*, such as a Qₒᵤₜ value of 20*%*, a Qᵢₙ value of 4*%*, or a Qₒᵤₜ value of 5*%*, a Qᵢₙ value of 1*%*, etc.

Step 4a/4b: the network simultaneously configures N310, N311, T310, T311 values for the UE. The configured N310, N311, T310, T311 values may be the legacy N310, N311, T310, T311 values, or the additionally extended N310, N311, T310, T311 values. The additionally extended N310 value may be n30, n40, etc., the additionally extended N311 value may be n15, n20, etc., the additionally extended T310 value may be 8000 milliseconds (ms), 10000 ms, etc., and the additionally extended T311 value may be 40000 ms, 50000 ms, etc.

Step 5a/5b: after receiving the configuration of the radio link management resource set transmitted from the network, the UE performs RLM measurement based on the received configuration.

Step 6a-1/6b-1: UE detects an RLF, that is, an RLF occurs in pTRP (TRP1), and triggers a reestablishment procedure.

Step 6a-2/6b-2: UE detects an RLF, that is, an RLF occurs in pTRP (TRP1), and triggers the transmission of MCG/SCG failure information message.

Step 6a-3/6b-3: UE detects an RLF, that is, an RLF occurs in pTRP (TRP1), does not trigger reestablishment, and continues to use an aTRP (TRP2, TRP3, TRP4, TRP5, etc.) for data transmission, where the aTRP is a candidate TRP, TRP2 is another TRP that is transmitting data, and TRP3, TRP4, TRP5 are candidate TRPs.

Step 6a-4/6b-4: The UE detects an RLF, that is, an RLF occurs in pTRP (TRP1), does not trigger the transmission of MCG/SCG failure information message, and continues to use an aTRP (TRP2, TRP3, TRP4, TRP5, etc.) for data transmission, where the aTRP is a candidate TRP, TRP2 is another TRP that is transmitting data, and TRP3, TRP4, and TRP5 are candidate TRPs.

Example 2: The first configuration information is configured with only one radio link management resource set, and RLM may be performed on the RSs for multiple TRPs.

Step 1a: the UE receives downlink data from two TRPs simultaneously.

Step 1b: the UE and the network transmit data on one TRP.

Step 2a: the network configures a configuration of radio link management resource set for the UE, where the RS configured by the network is associated with TRP1 and/or TRP2 (two TRPs are used as an example below); or the RS configured by the network is associated with TRP1, TRP2, TRP3, TRP4, TRP5, etc., where TRP1 and TRP2 are TRPs that are transmitting data, and TRP3, TRP4, and TRP5 are candidate TRPs.

Step 2a-1: the network indicates that the configured RS is associated with TRP1 and/or TRP2 in an implicit manner, that is, the network does not configure an explicit indication, and the default is that the configured RS is associated with TRP1 and/or TRP2; or it is indicated in the monitoring purpose that in case that the monitoring purpose is for RLM and/or beam failure detection, the indicated RS is associated with TRP1 and/or TRP2.

Step 2a-2: the network indicates that the configured RS is associated with TRP1 and/or TRP2 in an explicit manner, that is, the configuration includes 1 bit of indication information.

Step 2a-3: the network explicitly indicates that the configured RS is associated with TRP1 and/or TRP2, that is, the configuration includes identifier information of TRP, such as PCI, and the identifier information of TRP is set to corresponding PCI of TRP1 or TRP2 (for example, all identifier information of TRP for monitoring purposes of RLM and/or beam failure detection may be set to the PCI of the TRP1 or the TRP2). In addition to PCI, the identifier information of TRP may also be in other forms, such as RLMRSSetId, BFDRSSetId, etc.

Step 2a-4: in case that configuration of the radio link management resource set already includes identifier information of TRP, it is necessary to indicate at this PCI that in case that the monitoring purpose is for RLM and/or beam failure detection, the PCI needs to be configured as the PCI of the corresponding TRP1 and/or TRP2.

Step 2b: the network configures the configuration of the radio link management resource set for the UE, where the RS configured by the network is associated with the pTRP and/or aTRP, where the aTRP is a candidate TRP.

Step 2b-1: the network indicates that the configured RS is associated with the pTRP and/or aTRP in an implicit manner, that is, the network does not configure an explicit indication, and the default is that the configured RS is associated with the pTRP and/or aTRP; or it is indicated at the monitoring purpose that in case that the monitoring purpose is for RLM and/or beam failure detection, the indicated RS is associated with the pTRP and/or aTRP.

Step 2b-2: the network indicates that the configured RS is associated with the pTRP and/or aTRP explicitly, that is, the configuration includes 1 bit of indication information.

Step 2b-3: the network indicates that the configured RS is associated with the pTRP and/or aTRP in an explicit manner, that is, the configuration includes identifier information of TRP, such as PCI, and the identifier information of TRP is set to PCI of the corresponding pTRP or aTRP (for example, all identifier information of TRP for monitoring purposes of RLM and/or beam failure detection may be set to PCI of the pTRP or aTRP), where the identifier information of TRP may be in other forms besides PCI, for example, RLMRSSetId, BFDRSSetId, etc.

Step 2b-4: in case that the configuration of the radio link management resource set already includes identifier information of TRP, it is necessary to indicate at this PCI that in case that the monitoring purpose is for RLM and/or beam failure detection, the PCI needs to be configured as the PCI of the corresponding pTRP and/or aTRP.

Step 3a/3b: the network simultaneously configures *rlmInSyncOutOfSyncThreshold* to the UE. The configured *rlmInSyncOutOfSyncThreshold* may be the legacy *rlmInSyncOutOfSyncThreshold* or the additionally extended *rlmInSyncOutOfSyncThreshold.* The additionally extended *rlmInSyncOutOfSyncThreshold* may be n2, corresponding to a value of 2, which may correspond to Qₒᵤₜ and Qᵢₙ values different from the legacy *rlmInSyncOutOfSyncThreshold*, such as a Qₒᵤₜ value of 20*%*, a Qᵢₙ value of 4*%*, or a Qₒᵤₜ value of 5*%*, a Qᵢₙ value of 1*%*, etc.

Step 4a/4b: the network simultaneously configures N310, N311, T310, T311 values for the UE. The configured N310, N311, T310, T311 values may be the legacy N310, N311, T310, T311 values, or the additionally extended N310, N311, T310, T311 values. The additionally extended N310 value may be n30, n40, etc., the additionally extended N311 value may be n15, n20, etc., the additionally extended T310 value may be 8000 ms, 10000 ms, etc., and the additionally extended T311 value may be 40000 ms, 50000 ms, etc.

Step 5a/5b: after receiving the configuration of the radio link management resource set transmitted from the network, the UE performs RLM based on the received configuration.

Step 6a-1/6b-1: the UE detects an RLF, the RLF is detected in pTRP (TRP1) or aTRP (TRP2 or TRP2, TRP3, etc.), or the RLF is detected in both pTRP (TRP1) and aTRP (TRP2 or TRP2, TRP3, etc.), and the reestablishment procedure is triggered.

Step 6a-2/6b-2: the UE detects an RLF, the RLF is detected in pTRP (TRP1) or aTRP (TRP2 or TRP2, TRP3, etc.), or the RLF is detected in both pTRP (TRP1) and aTRP (TRP2 or TRP2, TRP3, etc.), and the transmission of MCG/SCG failure information message is triggered.

Step 6a-3/6b-3: the UE detects an RLF, the RLF is detected in pTRP (TRP1) or aTRP (TRP2 or TRP2, TRP3, etc.), or the RLF is detected in both pTRP (TRP1) and aTRP (TRP2 or TRP2, TRP3, etc.), the reestablishment is not triggered, and the TRP where no RLF is used for data transmission.

Step 6a-4/6b-4: the UE detects an RLF, the RLF is detected in pTRP (TRP1) or aTRP (TRP2 or TRP2, TRP3, etc.), or the RLF is detected in both pTRP (TRP1) and aTRP (TRP2 or TRP2, TRP3, etc.), the transmission of MCG/SCG failure information message is not triggered, and the TRP where no RLF is used for data transmission.

Example 3: The first configuration information is configured with multiple radio link management resource sets, and each of multiple TRPs may be configured with one radio link management resource set.

Step 1a: in the mTRP scenario, the UE receives downlink data from two TRPs simultaneously.

Step 1b: in the ICBM scenario, the UE and the network perform data transmission on one TRP.

Step 2a/2b: the network configures configuration of the radio link management resource set for the UE, and each TRP is configured with configuration of one radio link management resource set independently. Each configuration of radio link management resource set is only configured with the RS for the same TRP, and each configuration of radio link management resource set is associated with one piece of identifier information of TRP such as PCI to indicate which TRP the configuration of radio link management resource set is for.

Step 3a-1/3b-1: the network simultaneously configures a *rlmInSyncOutOfSyncThreshold* shared by a pTRP (TRP1) and an aTRP (TRP2 or TRP2, TRP3, etc.) for the UE. The configured *rlmInSyncOutOfSyncThreshold* may be the legacy *rlmInSyncOutOfSyncThreshold*, or the additionally extended *rlmInSyncOutOfSyncThreshold.* The additionally extended *rlmInSyncOutOfSyncThreshold* may be n2, corresponding to a value of 2, which may correspond to Qₒᵤₜ and Qᵢₙ values different from the legacy *rlmInSyncOutOfSyncThreshold*, such as a Qₒᵤₜ value of 20*%*, a Qᵢₙ value of 4*%*, or a Qₒᵤₜ value of 5*%*, a Qᵢₙ value of 1*%*, etc.

Step 3a-2/3b-2: the network configures *rlmInSyncOutOfSyncThreshold* for pTRP (TRP1) and aTRP (TRP2 or TRP2, TRP3, etc.) respectively for the UE. The configured *rlmInSyncOutOfSyncThreshold* for pTRP (TRP1) and aTRP (TRP2 or TRP2, TRP3, etc.) may be the legacy *rlmInSyncOutOfSyncThreshold* or the additionally extended *rlmInSyncOutOfSyncThreshold.* The additionally extended *rlmInSyncOutOfSyncThreshold* may be n2, corresponding to the value 2, which may correspond to Qₒᵤₜ and Qᵢₙ values different from the legacy *rlmInSyncOutOfSyncThreshold*, such as Qₒᵤₜ value of 20*%*, Qᵢₙ value of 4*%*, or Qₒᵤₜ value of 5*%*, Qᵢₙ value of 1*%*, etc.

Step 4a-1/4b-1: the network simultaneously configures the N310, N311, T310, T311 values shared by pTRP (TRP1) and aTRP (TRP2 or TRP2, TRP3, etc.) for the UE. The configured N310, N311, T310, T311 values may be the legacy N310, N311, T310, T311 values, or the additionally extended N310, N311, T310, T311 values. The additionally extended N310 value may be n30, n40, etc., the additionally extended N311 value may be n15, n20, etc., the additionally extended T310 value may be 8000 ms, 10000 ms, etc., and the additionally extended T311 value may be 40000 ms, 50000 ms, etc.

Step 4a-2/4b-2: the network configures N310, N311, T310, T311 values for pTRP (TRP1) and aTRP (TRP2 or TRP2, TRP3, etc.) respectively to the UE. The configured N310, N311, T310, T311 values for pTRP (TRP1) and aTRP (TRP2 or TRP2, TRP3, etc.) may be the legacy N310, N311, T310, T311 values, or additionally extended N310, N311, T310, T311 values. The additionally extended N310 value may be n30, n40, etc., the additionally extended N311 value may be n15, n20, etc., the additionally extended T310 value may be 8000ms, 10000ms, etc., the additionally extended T311 value may be 40000ms, 50000ms, etc.;
Step 5a/5b: the network simultaneously configures an indication, indicating that reestablishment is triggered in case that RLF is detected in several TRPs.

Step 6a/6b: after receiving the configuration of radio link management resource set transmitted from the network, the UE performs RLM measurement based on the received configuration.

Step 7a-1/7b-1: the UE detects an RLF in one or more TRPs and continues to use other TRPs where no RFL is detected for data transmission.

Step 7a-2/7b-2: The UE detects an RLF in the pTRP (TRP1) and triggers the reestablishment procedure.

Step 7a-3/7b-3: the UE detects an RLF in the pTRP (TRP1) and triggers the transmission of MCG/SCG failure information message.

Step 7a-4/7b-4: the UE detects an RLF in one or more TRPs and triggers the reestablishment procedure.

Step 7a-5/7b-5: the UE detects an RLF in one or more TRPs, and triggers the transmission of MCG/SCG failure information message.

Step 7a-6/7b-6: the UE detects an RLF in one or more TRPs, where the number of TRPs with RLF is greater than or equal to the number configured by the network in step 5/5a, and the reestablishment procedure is triggered.

Step 7a-7/7b-7: the UE detects an RLF in one or more TRPs, where the number of TRPs with RLF is greater than or equal to the number configured by the network in step 5/5a, and the transmission of MCG/SCG failure information message is triggered.

Step 7a-8/7b-8: the UE detects an RLF in all TRPs, and triggers the reestablishment procedure.

Step 7a-9/7b-9: the UE detects an RLF in all TRPs, and triggers the transmission of MCG/SCG failure information message.

In the method for radio link management configuration provided by the embodiments of the present application, in case that the terminal is configured with multiple TRPs, the network configures one or more radio link management resource set configurations for the UE. The UE performs RLM based on the received configuration, and determines whether an RLF occurs based on the measurement result of RLM. In the present application, the problem of data interruption in RLM in case that a UE is configured with multiple TRPs is solved.

FIG. 2 is a second schematic flowchart of a method for radio link management configuration according to an embodiment of the present application. As shown in FIG. 2, the present application provides a method for radio link management configuration, performed by a network device, such as a base station, etc. The method includes the steps as follows.

Step 201: transmitting a first message to a terminal, where the first message includes one or more pieces of the following configuration information:
first configuration information, where the first configuration information is used for radio link quality management between the terminal and a configured cell; or
second configuration information, where the second configuration information is used for beam failure management between the terminal and a configured cell;
where the configured cell is configured with at least one transmission and reception point (TRP) associated with the first message.

In some embodiments, the first configuration information includes one or multiple radio link management resource sets;
where the one radio link management resource set or each of the multiple radio link management resource sets includes one or more pieces of the following information:
a monitoring resource set;
identifier information of TRP;
configuration information of a constant for radio resource management; or
a monitoring purpose of the radio link management resource set.

In some embodiments, the monitoring resource set includes one or more pieces of the following information:
identifier information of a reference signal (RS);
identifier information of TRP; or
a monitoring purpose of an RS.

In some embodiments, the configuration information of the constant for radio resource management includes one or more pieces of the following information:
a first timer, used for controlling RLF;
a second timer, used for controlling reestablishment;
a first in-sync threshold, used for determining in-sync;
a first out-of-sync threshold, used for determining out-of-sync;
a first counter, used for counting out-of-sync indications; or
a second counter, used for counting in-sync indications.

The method for radio link management configuration provided by the embodiments of the present application may refer to the above-mentioned method for radio link management configuration performed by the terminal, and may achieve the same effect. The same parts and beneficial effects of this embodiment that are the same as the above-mentioned corresponding method embodiments are not described in detail here.

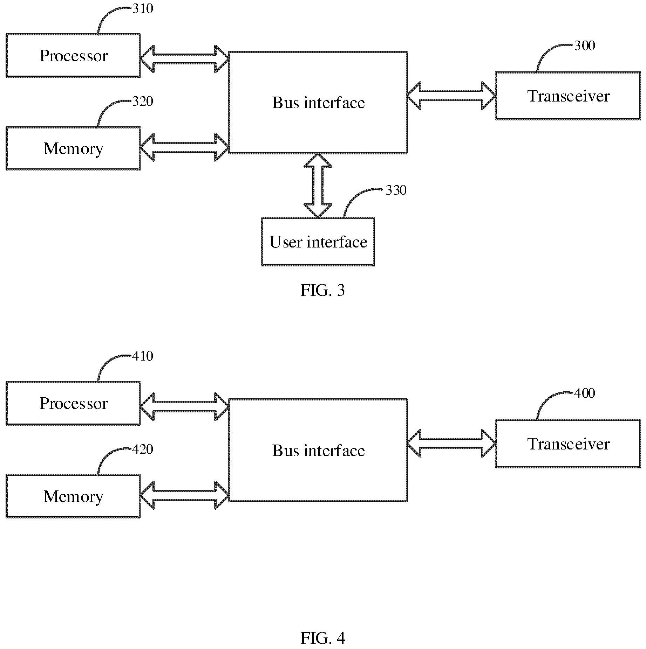

FIG. 3 is a schematic structural diagram of a terminal according to an embodiment of the present application. As shown in FIG. 3, the terminal includes a memory 320, a transceiver 300 and a processor 310,
where the memory 320 is used for storing a computer program, the transceiver 300 is used for transmitting and receiving data under control of the processor 310, and the processor 310 is used for reading the computer program in the memory 320 and performing the following operations of:
obtaining a first message transmitted from a network device, where the first message includes one or more pieces of the following configuration information:
first configuration information, where the first configuration information is used for radio link quality management between the terminal and a configured cell; or
second configuration information, where the second configuration information is used for beam failure management between the terminal and a configured cell;
performing radio link quality management between the terminal and the configured cell based on the first configuration information, and/or performing beam failure management between the terminal and the configured cell based on the second configuration information;
where the configured cell is configured with at least one TRP associated with the first message.

In an embodiment, the transceiver 300 is used for transmitting and receiving data under control of the processor 310.

In FIG. 3, a bus architecture may include any number of interconnected buses and bridges, which are linked together through various circuits of one or more processors represented by the processor 310 and one or more memories represented by the memory 320. The bus architecture may also link together various other circuits, such as peripherals, voltage regulators, and power management circuits, etc., which are well known in the art, and therefore are not further described in the present application. The bus interface provides an interface. The transceiver 300 may include multiple elements, i.e., including a transmitter and a receiver, units for providing communication with various other devices over transmission media including wireless channels, wired channels, fiber optic cables, and the like. For different user equipment, a user interface 330 may be an interface capable of externally or internally connecting the required equipment, and the connected equipment includes, but not limited to, a small keypad, a display, a speaker, a microphone, a joystick, and the like.

The processor 310 is responsible for managing the bus architecture and general processing, and the memory 320 may store data used by the processor 310 when performing operations.

In some embodiments, the processor 310 may be a central processing unit (CPU), an application specific integrated circuit (ASIC), a field-programmable gate array (FPGA), or a complex programmable logic device (CPLD), the processor may also use a multi-core architecture.

The processor is used to execute any of the methods performed by the terminal provided by the embodiments of the present application based on the executable instructions obtained by calling the computer program stored in the memory. The processor and the memory may also be arranged physically separately.

In some embodiments, the first configuration information includes one or multiple radio link management resource sets;
where the one radio link management resource set or each of the multiple radio link management resource sets includes one or more pieces of the following information:
a monitoring resource set;
identifier information of TRP;
configuration information of a constant for radio resource management; or
a monitoring purpose of the radio link management resource set.

In some embodiments, the monitoring resource set includes one or more pieces of the following information:
identifier information of reference signal (RS);
identifier information of TRP; or
a monitoring purpose of the RS.

In some embodiments, the first configuration information includes one or multiple radio link management resource sets;
the one radio link management resource set or each of the multiple radio link management resource sets is associated with one piece of given identifier information of TRP.

In some embodiments, in case that the monitoring purpose of the radio link management resource set and/or the monitoring purpose of the RS is a given purpose, the identifier information of TRP is given identifier information of TRP, or the identifier information of TRP is identifier information of TRP associated with the RS;
where the given purpose includes one or more of the following purposes:
for radio link monitoring; or
for beam failure detection.

In some embodiments, in case that the first configuration information includes one radio link management resource set, and the one radio link management resource set is used to perform failure detection on a reference signal (RS) for one TRP, the one radio link management resource set is associated with one TRP in one or more of the following modes:
each RS in the monitoring resource set included in the one radio link management resource set is associated with one piece of given identifier information of TRP;
the one radio link management resource set only includes one piece of identifier information of TRP; all RSs in the monitoring resource set included in the one radio link management resource set are associated with the one piece of identifier information of TRP; or
each RS in the monitoring resource set included in the one radio link management resource set is associated with one piece of identifier information of TRP, and the identifier information of TRP associated with each RS is the same; the identifier information of TRP associated with each RS is included in the monitoring resource set.

In some embodiments, in case that the first configuration information includes one radio link management resource set, and the one radio link management resource set is used to perform failure detection on reference signals (RSs) for multiple TRPs, the one radio link management resource set is associated with the multiple TRPs in the following mode:
each RS in the monitoring resource set included in the one radio link management resource set is associated with one piece of identifier information of TRP; and the identifier information of TRP associated with all RSs includes multiple types of identifier information of TRP.

In some embodiments, in case that the first configuration information includes multiple radio link management resource sets, and the multiple radio link management resource sets are used to perform failure detection on reference signals (RSs) for multiple TRPs, the multiple radio link management resource sets are associated with the multiple TRPs in one or more of the following modes:
each of the multiple radio link management resource sets is associated with one or more pieces of given identifier information of TRP; or
each of the multiple radio link management resource sets includes one or more pieces of given identifier information of TRP associated with the each of the multiple radio link management resource sets.

In some embodiments, the configuration information of the constant for radio resource management includes one or more pieces of the following information:
a first timer, used for controlling RLF;
a second timer, used for controlling reestablishment;
a first in-sync threshold, used for determining in-sync;
a first out-of-sync threshold, used for determining out-of-sync;
a first counter, used for counting out-of-sync indications; or
a second counter, used for counting in-sync indications.

In some embodiments, performing the radio link quality management between the terminal and the configured cell based on the first configuration information includes:
in case that an RLF occurs between the terminal and a first TRP, performing, by the terminal, at least one or more of the following operations:
triggering a radio resource control (RRC) reestablishment procedure;
reporting RLF information between the terminal and the first TRP through another TRP where no RLF occurs;
reporting RLF information between the terminal and the first TRP through another cell; or
reporting RLF information between the terminal and the first TRP through another node;
or, includes:
   in case that a cell RLF occurs, performing, by the terminal, at least one or more of the following operations:
   triggering a radio resource control (RRC) reestablishment procedure;
   reporting cell RLF information through another TRP where no RLF occurs;
   reporting cell RLF information through another cell; or
   reporting cell RLF information through another node;
   or, includes:
      in a dual connectivity (DC) scenario, in case that an RLF is detected in a primary cell (PCell) or in a primary secondary cell (PSCell), the terminal transmits a master cell group (MCG) failure message or a secondary cell group (SCG) failure message;
      where the first TRP is one of the at least one TRP associated with the first message.

In some embodiments, in case that the first TRP is a given TRP, the RLF between the terminal and the first TRP includes one or more of the following situations:
the terminal determines that a failure occurs in a radio link between the terminal and the first TRP based on identifier information of the first TRP included in the one radio link management resource set; or
the terminal determines that a failure occurs in a radio link between the terminal and the first TRP based on identifier information of the first TRP included in a radio link management resource set in the multiple radio link management resource sets;
in case that the first TRP is a TRP other than the given TRP, the RLF between the terminal and the first TRP includes one or more of the following situations:
   the terminal determines that a failure occurs in a radio link between the terminal and the first TRP based on part or all of identifier information of the first TRP included in the one radio link management resource set; or
   the terminal determines that a failure occurs in a radio link between the terminal and the first TRP based on part or all of identifier information of the first TRP included in the multiple radio link management resource sets;
   the cell RLF includes one or more of the following situations:
      the terminal determines the cell RLF based on identifier information of a second TRP included in the one radio link management resource set;
      the terminal determines the cell RLF based on identifier information of a second TRP included in one radio link management resource set in the multiple radio link management resource sets;
      the terminal determines the cell RLF based on part or all of identifier information of a third TRP included in the one radio link management resource set;
      the terminal determines the cell RLF based on part or all of identifier information of a third TRP included in the multiple radio link management resource sets; or
      the terminal determines the cell RLF based on identifier information of a second TRP and all of identifier information of a third TRP included in the one radio link management resource set or the multiple radio link management resource sets;
      where any of the second TRP and the third TRP is one of the at least one TRP associated with the first message.

In some embodiments, the second configuration information includes a beam failure management resource set;
the beam failure management resource set includes at least one piece of candidate beam recovery configuration information; and the candidate beam recovery configuration information includes one or more pieces of the following information:
a candidate beam reference signal (RS) identifier; or
a TRP identifier.

It should be noted that the above terminal provided by the embodiments of the present application may implement all the method steps implemented by the above method embodiments performed by the terminal, and may achieve the same effect. The same parts and beneficial effects as the same method embodiments are not repeated in the present application.

FIG. 4 is a schematic structural diagram of a network device according to an embodiment of the present application. As shown in FIG. 4, the network device includes a memory 420, a transceiver 400 and a processor 410,
where the memory 420 is used for storing a computer program, the transceiver 400 is used for transmitting and receiving data under control of the processor 410, and the processor 410 is used for reading the computer program in the memory 420 and performing the following operations of:
transmitting a first message to a terminal, where the first message includes one or more pieces of the following configuration information:
first configuration information, where the first configuration information is used for radio link quality management between the terminal and a configured cell; or
second configuration information, where the second configuration information is used for beam failure management between the terminal and a configured cell;
where the configured cell is configured with at least one transmission and reception point (TRP) associated with the first message.

In an embodiment, the transceiver 400 is used for transmitting and receiving data under control of the processor 410.

In FIG. 4, a bus architecture may include any number of interconnected buses and bridges, which are linked together through various circuits of one or more processors represented by the processor 410 and one or more memories represented by the memory 420. The bus architecture may also link together various other circuits, such as peripherals, voltage regulators, and power management circuits, etc., which are well known in the art, and therefore are not further described in the present application. The bus interface provides an interface. The transceiver 400 may include multiple elements, i.e., including a transmitter and a receiver, units for providing communication with various other devices over transmission media including wireless channels, wired channels, fiber optic cables, and the like. The processor 410 is responsible for managing the bus architecture and general processing, and the memory 420 may store data used by the processor 410 when performing operations.

The processor 410 may be a central processing unit (CPU), an application specific integrated circuit (ASIC), a field-programmable gate array (FPGA), or a complex programmable logic device (CPLD), the processor may also use a multi-core architecture.

In some embodiments, the first configuration information includes one or multiple radio link management resource sets;
where the one radio link management resource set or each of the multiple radio link management resource sets includes one or more pieces of the following information:
a monitoring resource set;
identifier information of TRP;
configuration information of a constant for radio resource management; or
a monitoring purpose of the radio link management resource set.

In some embodiments, the monitoring resource set includes one or more pieces of the following information:
identifier information of reference signal (RS);
identifier information of TRP; or
a monitoring purpose of RS.

In some embodiments, the configuration information of the constant for radio resource management includes one or more pieces of the following information:
a first timer, used for controlling RLF;
a second timer, used for controlling reestablishment;
a first in-sync threshold, used for determining in-sync;
a first out-of-sync threshold, used for determining out-of-sync;
a first counter, used for counting out-of-sync indications; or
a second counter, used for counting in-sync indications.

The above network device provided by the embodiments of the present application may implement all the method steps implemented by the above method embodiments performed by the network device, and may achieve the same effect. The same parts and beneficial effects as the same method embodiments are not repeated in the present application.

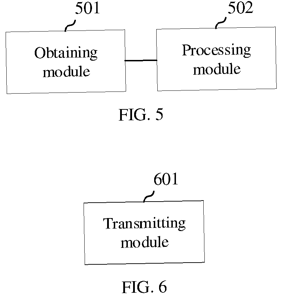

FIG. 5 is a first schematic structural diagram of an apparatus for radio link management configuration according to an embodiment of the present application. As shown in FIG. 5, an embodiment of the present application provides an apparatus for radio link management configuration, including:
an obtaining module 501, used for obtaining a first message transmitted from a network device, where the first message includes one or more pieces of the following configuration information:
first configuration information, where the first configuration information is used for radio link quality management between the terminal and a configured cell; or
second configuration information, where the second configuration information is used for beam failure management between the terminal and a configured cell;
a processing module 502, used for performing radio link quality management between the terminal and the configured cell based on the first configuration information, and/or performing beam failure management between the terminal and the configured cell based on the second configuration information;
where the configured cell is configured with at least one transmission and reception point (TRP) associated with the first message.

In some embodiments, the first configuration information includes one or multiple radio link management resource sets;
where the one radio link management resource set or each of the multiple radio link management resource sets includes one or more pieces of the following information:
a monitoring resource set;
identifier information of TRP;
configuration information of a constant for radio resource management; or
a monitoring purpose of the radio link management resource set.

In some embodiments, the monitoring resource set includes one or more pieces of the following information:
identifier information of reference signal (RS);
identifier information of TRP; or
a monitoring purpose of RS.

In some embodiments, the first configuration information includes one or multiple radio link management resource sets;
the one radio link management resource set or each of the multiple radio link management resource sets is associated with one piece of given identifier information of TRP.

In some embodiments, in case that the monitoring purpose of the radio link management resource set and/or the monitoring purpose of the RS is a given purpose, the identifier information of TRP is given identifier information of TRP, or the identifier information of TRP is identifier information of TRP associated with the RS;
where the given purpose includes one or more of the following purposes:
for radio link monitoring; or
for beam failure detection.

In some embodiments, in case that the first configuration information includes one radio link management resource set, and the one radio link management resource set is used to perform failure detection on a reference signal (RS) for one TRP, the one radio link management resource set is associated with one TRP in one or more of the following modes:
each RS in the monitoring resource set included in the one radio link management resource set is associated with one piece of given identifier information of TRP;
the one radio link management resource set only includes one piece of identifier information of TRP; all RSs in the monitoring resource set included in the one radio link management resource set are associated with the one piece of identifier information of TRP; or
each RS in the monitoring resource set included in the one radio link management resource set is associated with one piece of identifier information of TRP, and the identifier information of TRP associated with each RS is the same; the identifier information of TRP associated with each RS is included in the monitoring resource set.

In some embodiments, in case that the first configuration information includes one radio link management resource set, and the one radio link management resource set is used to perform failure detection on reference signals (RSs) for multiple TRPs, the one radio link management resource set is associated with the multiple TRPs in the following mode:
each RS in the monitoring resource set included in the one radio link management resource set is associated with one piece of identifier information of TRP; and the identifier information of TRP associated with all RSs includes multiple types of identifier information of TRP.

In some embodiments, in case that the first configuration information includes multiple radio link management resource sets, and the multiple radio link management resource sets are used to perform failure detection on reference signals (RSs) for multiple TRPs, the multiple radio link management resource sets are associated with the multiple TRPs in one or more of the following modes:
each of the multiple radio link management resource sets is associated with one or more pieces of given identifier information of TRP; or
each of the multiple radio link management resource sets includes one or more pieces of given identifier information of TRP associated with the each of the multiple radio link management resource sets.

In some embodiments, the configuration information of the constant for radio resource management includes one or more pieces of the following information:
a first timer, used for controlling RLF;
a second timer, used for controlling reestablishment;
a first in-sync threshold, used for determining in-sync;
a first out-of-sync threshold, used for determining out-of-sync;
a first counter, used for counting out-of-sync indications; or
a second counter, used for counting in-sync indications.

In some embodiments, performing the radio link quality management between the terminal and the configured cell based on the first configuration information includes:
in case that an RLF occurs between the terminal and a first TRP, performing, by the terminal, at least one or more of the following operations:
triggering a radio resource control (RRC) reestablishment procedure;
reporting RLF information between the terminal and the first TRP through another TRP where no RLF occurs;
reporting RLF information between the terminal and the first TRP through another cell; or
reporting RLF information between the terminal and the first TRP through another node;
or, includes:
   in case that a cell RLF occurs, the terminal performs at least one or more of the following operations:
   triggering a radio resource control (RRC) reestablishment procedure;
   reporting cell RLF information through another TRP where no RLF occurs;
   reporting cell RLF information through another cell; or
   reporting cell RLF information through another node;
   or, includes:
      in a dual connectivity (DC) scenario, in case that an RLF is detected in a primary cell (PCell) or in a primary secondary cell (PSCell), the terminal transmits a master cell group (MCG) failure message or a secondary cell group (SCG) failure message;
      where the first TRP is one of the at least one TRP associated with the first message.

In some embodiments, in case that the first TRP is a given TRP, the RLF between the terminal and the first TRP includes one or more of the following situations:
the terminal determines that a failure occurs in a radio link between the terminal and the first TRP based on identifier information of the first TRP included in the one radio link management resource set; or
the terminal determines that a failure occurs in a radio link between the terminal and the first TRP based on identifier information of the first TRP included in one radio link management resource set in the multiple radio link management resource sets;
in case that the first TRP is a TRP other than the given TRP, the RLF between the terminal and the first TRP includes one or more of the following situations:
   the terminal determines that a failure occurs in a radio link between the terminal and the first TRP based on part or all of identifier information of the first TRP included in the one radio link management resource set; or
   the terminal determines that a failure occurs in a radio link between the terminal and the first TRP based on part or all of identifier information of the first TRP included in the multiple radio link management resource sets;
   the cell RLF includes one or more of the following situations:
      the terminal determines the cell RLF based on identifier information of a second TRP included in the one radio link management resource set;
      the terminal determines the cell RLF based on identifier information of a second TRP included in one radio link management resource set in the multiple radio link management resource sets;
      the terminal determines the cell RLF based on part or all of identifier information of a third TRP included in the one radio link management resource set;
      the terminal determines the cell RLF based on part or all of identifier information of a third TRP included in the multiple radio link management resource sets; or
      the terminal determines the cell RLF based on identifier information of a second TRP and all of identifier information of a third TRP included in the one radio link management resource set or the multiple radio link management resource sets;
      where any of the second TRP and the third TRP is one of the at least one TRP associated with the first message.

In some embodiments, the second configuration information includes a beam failure management resource set;
the beam failure management resource set includes at least one piece of candidate beam recovery configuration information; and the candidate beam recovery configuration information includes one or more pieces of the following information:
a candidate beam reference signal (RS) identifier; or
a TRP identifier.

The above apparatus for radio link management configuration provided by the embodiments of the present application may implement all the method steps implemented by the above method embodiments performed by the terminal, and may achieve the same effect. The same parts and beneficial effects as the same method embodiments are not repeated in the present application.

FIG. 6 is a second schematic structural diagram of an apparatus for radio link management configuration according to an embodiment of the present application. As shown in FIG. 6, an embodiment of the present application provides an apparatus for radio link management configuration, including:
a transmitting module 601, used for transmitting a first message to a terminal, where the first message includes one or more pieces of the following configuration information:
first configuration information, where the first configuration information is used for radio link quality management between the terminal and a configured cell; or
second configuration information, where the second configuration information is used for beam failure management between the terminal and a configured cell;
where the configured cell is configured with at least one transmission and reception point (TRP) associated with the first message.

In some embodiments, the first configuration information includes one or multiple radio link management resource sets;
where the one radio link management resource set or each of the multiple radio link management resource sets includes one or more pieces of the following information:
a monitoring resource set;
identifier information of TRP;
configuration information of a constant for radio resource management; or
a monitoring purpose of the radio link management resource set.

In some embodiments, the monitoring resource set includes one or more pieces of the following information:
identifier information of reference signal (RS);
identifier information of TRP; or
a monitoring purpose of RS.

In some embodiments, the configuration information of the constant for radio resource management includes one or more pieces of the following information:
a first timer, used for controlling RLF;
a second timer, used for controlling reestablishment;
a first in-sync threshold, used for determining in-sync;
a first out-of-sync threshold, used for determining out-of-sync;
a first counter, used for counting out-of-sync indications; or
a second counter, used for counting in-sync indications.

The above apparatus for radio link management configuration provided by the embodiments of the present application may implement all the method steps implemented by the above method embodiments performed by the network device, and may achieve the same effect. The same parts and beneficial effects as the same method embodiments are not repeated in the present application.

It should be noted that, the division of units/modules in the embodiments of the present application is schematic, and is only a logical function division, and there may be other division manners in actual implementation. In addition, the functional units/modules in the various embodiments of the present application may be integrated into one processing unit/module, or each unit/module may exist alone physically, or two or more units/modules may be integrated into one unit/module. The above-mentioned integrated unit/module may be implemented in the form of hardware or software functional unit/module.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

In some embodiments, the present application further provides a computer readable storage medium storing a computer program that causes a computer to perform the method for determining C-DAI order provided by the above-mentioned method embodiments.

The above computer readable storage medium provided by the embodiments of the present application may implement all the method steps implemented by the above method embodiments, and may achieve the same effect. The same parts and beneficial effects as the same method embodiments are not repeated in the present application.

It should be noted that the computer readable storage medium may be any available medium or data storage device that may be accessed by the computer, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

It should also be noted that the terms "first", "second", etc. in the embodiments of the present application are used to distinguish similar objects, and are not used to describe a specific order or sequence. In an embodiment, the terms used in this way may be interchangeable under appropriate circumstances, so that the embodiments of the present application may be implemented in an order other than those illustrated or described herein. The objects distinguished by "first" and "second" are generally the same class, and the number of objects is not limited. For example, the first object may be one or more.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

In the present application, "determine B based on A" means that A should be considered in case of determining B. It is not limited to "determine B based on A alone", but should also include: "determine B based on A and C", "determine B based on A, C and E", "determine C based on A, and further determine B based on C", etc. It may also include taking A as a condition for determining B, for example, "in case that A meets a first condition, determine B using a first mode"; for another example, "in case that A meets a second condition, determine B"; for another example, "in case that A meets a third condition, determine B based on a first parameter", etc. Of course, it may also be a condition for taking A as a factor for determining B, for example, "in case that A meets a first condition, determine C using a first mode, and further determine B based on C", etc.

The solutions according to the embodiments of the present application may be applicable to various systems, for example, 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal device in the embodiments of the present application may be a device that provides voice and/or data connectivity to a user, a handheld device with a wireless connection function, or other processing devices connected to a wireless modem. In different systems, the names of the terminal device may be different. For example, in the 5G system, the terminal device may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal device. Depending on the specific scenario, the base station may be called an access point, or a device communicating with a wireless terminal device through one or more sectors on the air interface in the access network, or other names. The network device may be used for exchanging received air frames with internet protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

A multi-input multi-output (MIMO) transmission may be performed between the network device and the terminal device by using one or more antennas. The MIMO transmission may be single-user MIMO (SU-MIMO) or multi-user MIMO (MU-MIMO). Depending on the form and number of antenna combinations, MIMO transmission may be 2D-MIMO, 3D-MIMO, FD-MIMO or massive-MIMO, and may also be diversity transmission, precoding transmission, beamforming transmission, etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for radio link management configuration, performed by a terminal, comprising:
obtaining a first message transmitted from a network device, wherein the first message comprises one or more pieces of the following configuration information:
first configuration information, used for radio link quality management between the terminal and a configured cell; or
second configuration information, used for beam failure management between the terminal and a configured cell;
performing radio link quality management between the terminal and the configured cell based on the first configuration information, and/or performing beam failure management between the terminal and the configured cell based on the second configuration information;
wherein the configured cell is configured with at least one transmission and reception point (TRP) associated with the first message.

2. The method of claim 1, wherein the first configuration information comprises one or multiple radio link management resource sets;
wherein the one radio link management resource set or each of the multiple radio link management resource sets comprises one or more pieces of the following information:
a monitoring resource set;
identifier information of TRP;
configuration information of a constant for radio resource management; or
a monitoring purpose of the radio link management resource set.

3. The method of claim 2, wherein the monitoring resource set comprises one or more pieces of the following information:
identifier information of a reference signal (RS);
identifier information of TRP; or
a monitoring purpose of a reference signal (RS).

4. The method of claim 1, wherein the first configuration information comprises one or multiple radio link management resource sets;
the one radio link management resource set or each of the multiple radio link management resource sets is associated with one piece of given identifier information of TRP.

5. The method of claim 2 or 3, wherein in case that the monitoring purpose of the radio link management resource set and/or the monitoring purpose of the RS is a given purpose, the identifier information of TRP is given identifier information of TRP, or the identifier information of TRP is identifier information of TRP associated with the RS;
wherein the given purpose comprises one or more of the following purposes:
for radio link monitoring; or
for beam failure detection.

6. The method of any of claims 2 to 4, wherein in case that the first configuration information comprises one radio link management resource set, and the one radio link management resource set is used to perform failure detection on a reference signal (RS) for one TRP, the one radio link management resource set is associated with one TRP in one or more of the following modes:
each RS in the monitoring resource set comprised in the one radio link management resource set is associated with one piece of given identifier information of TRP;
the one radio link management resource set only comprises one piece of identifier information of TRP; all RSs in the monitoring resource set comprised in the one radio link management resource set are associated with the one piece of identifier information of TRP; or
each RS in the monitoring resource set comprised in the one radio link management resource set is associated with one piece of identifier information of TRP, and the identifier information of TRP associated with each RS is the same; the identifier information of TRP associated with each RS is comprised in the monitoring resource set.

7. The method of any of claims 2 to 4, wherein in case that the first configuration information comprises one radio link management resource set, and the one radio link management resource set is used to perform failure detection on reference signals (RSs) for multiple TRPs, the one radio link management resource set is associated with the multiple TRPs in the following mode:
each RS in the monitoring resource set comprised in the one radio link management resource set is associated with one piece of identifier information of TRP; and the identifier information of TRP associated with all RSs comprises multiple types of identifier information of TRP.

8. The method of any of claims 2 to 4, wherein in case that the first configuration information comprises multiple radio link management resource sets, and the multiple radio link management resource sets are used to perform failure detection on reference signals (RSs) for multiple TRPs, the multiple radio link management resource sets are associated with the multiple TRPs in one or more of the following modes:
each of the multiple radio link management resource sets is associated with one or more pieces of given identifier information of TRP; or
each of the multiple radio link management resource sets comprises one or more pieces of given identifier information of TRP associated with the each of the multiple radio link management resource sets.

9. The method of claim 2, wherein the configuration information of the constant for radio resource management comprises one or more pieces of the following information:
a first timer, used for controlling radio link failure (RLF);
a second timer, used for controlling reestablishment;
a first in-sync threshold, used for determining in-sync;
a first out-of-sync threshold, used for determining out-of-sync;
a first counter, used for counting out-of-sync indications; or
a second counter, used for counting in-sync indications.

10. The method of any of claims 2 to 4, wherein performing the radio link quality management between the terminal and the configured cell based on the first configuration information comprises:
in case that a radio link failure (RLF) occurs between the terminal and a first TRP, performing, by the terminal, at least one or more of the following operations:
triggering a radio resource control (RRC) reestablishment procedure;
reporting RLF information between the terminal and the first TRP through another TRP where no RLF occurs;
reporting RLF information between the terminal and the first TRP through another cell; or
reporting RLF information between the terminal and the first TRP through another node;
or, comprises:
in case that a cell RLF occurs, performing, by the terminal, at least one or more of the following operations:
triggering a radio resource control (RRC) reestablishment procedure;
reporting cell RLF information through another TRP where no RLF occurs;
reporting cell RLF information through another cell; or
reporting cell RLF information through another node;
or, comprises:
in a dual connectivity (DC) scenario, in case that an RLF is detected in a primary cell (PCell) or in a primary secondary cell (PSCell), the terminal transmits a master cell group (MCG) failure message or a secondary cell group (SCG) failure message;
wherein the first TRP is one of the at least one TRP associated with the first message.

11. The method of claim 10, wherein in case that the first TRP is a given TRP, the RLF between the terminal and the first TRP comprises one or more of the following situations:
the terminal determines that a failure occurs in a radio link between the terminal and the first TRP based on identifier information of the first TRP comprised in the one radio link management resource set; or
the terminal determines that a failure occurs in a radio link between the terminal and the first TRP based on identifier information of the first TRP comprised in one radio link management resource set in the multiple radio link management resource sets;
in case that the first TRP is a TRP other than the given TRP, the RLF between the terminal and the first TRP comprises one or more of the following situations:
the terminal determines that a failure occurs in a radio link between the terminal and the first TRP based on part or all of identifier information of the first TRP comprised in the one radio link management resource set; or
the terminal determines that a failure occurs in a radio link between the terminal and the first TRP based on part or all of identifier information of the first TRP comprised in the multiple radio link management resource sets;
the cell RLF comprises one or more of the following situations:
the terminal determines the cell RLF based on identifier information of a second TRP comprised in the one radio link management resource set;
the terminal determines the cell RLF based on identifier information of a second TRP comprised in one radio link management resource set in the multiple radio link management resource sets;
the terminal determines the cell RLF based on part or all of identifier information of a third TRP comprised in the one radio link management resource set;
the terminal determines the cell RLF based on part or all of identifier information of a third TRP comprised in the multiple radio link management resource sets; or
the terminal determines the cell RLF based on identifier information of a second TRP and all of identifier information of a third TRP comprised in the one radio link management resource set or the multiple radio link management resource sets;
wherein any of the second TRP and the third TRP is one of the at least one TRP associated with the first message.

12. The method of claim 1, wherein the second configuration information comprises a beam failure management resource set;
the beam failure management resource set comprises at least one piece of candidate beam recovery configuration information; and the candidate beam recovery configuration information comprises one or more pieces of the following information:
a candidate beam reference signal (RS) identifier; or
a TRP identifier.

13. A method for radio link management configuration, performed by a network device, comprising:
transmitting a first message to a terminal, wherein the first message comprises one or more pieces of the following configuration information:
first configuration information, used for radio link quality management between the terminal and a configured cell; or
second configuration information, used for beam failure management between the terminal and a configured cell;
wherein the configured cell is configured with at least one transmission and reception point (TRP) associated with the first message.

14. The method of claim 13, wherein the first configuration information comprises one or multiple radio link management resource sets;
wherein the one radio link management resource set or each of the multiple radio link management resource sets comprises one or more pieces of the following information:
a monitoring resource set;
identifier information of TRP;
configuration information of a constant for radio resource management; or
a monitoring purpose of the radio link management resource set.

15. The method of claim 14, wherein the monitoring resource set comprises one or more pieces of the following information:
identifier information of a reference signal (RS);
identifier information of TRP; or
a monitoring purpose of a reference signal (RS).

16. The method of claim 14, wherein the configuration information of the constant for radio resource management comprises one or more pieces of the following information:
a first timer, used for controlling radio link failure (RLF);
a second timer, used for controlling reestablishment;
a first in-sync threshold, used for determining in-sync;
a first out-of-sync threshold, used for determining out-of-sync;
a first counter, used for counting out-of-sync indications; or
a second counter, used for counting in-sync indications.

17. A terminal, comprising a memory, a transceiver and a processor,
wherein the memory is used for storing a computer program, the transceiver is used for transmitting and receiving data under control of the processor, and the processor is used for reading the computer program in the memory and performing the following operations of:
obtaining a first message transmitted from a network device, wherein the first message comprises one or more pieces of the following configuration information:
first configuration information, used for radio link quality management between the terminal and a configured cell; or
second configuration information, used for beam failure management between the terminal and a configured cell;
performing radio link quality management between the terminal and the configured cell based on the first configuration information, and/or performing beam failure management between the terminal and the configured cell based on the second configuration information;
wherein the configured cell is configured with at least one transmission and reception point (TRP) associated with the first message.

18. The terminal of claim 17, wherein the first configuration information comprises one or multiple radio link management resource sets;
wherein the one radio link management resource set or each of the multiple radio link management resource sets comprises one or more pieces of the following information:
a monitoring resource set;
identifier information of TRP;
configuration information of a constant for radio resource management; or
a monitoring purpose of the radio link management resource set.

19. The terminal of claim 18, wherein the monitoring resource set comprises one or more pieces of the following information:
identifier information of a reference signal (RS);
identifier information of TRP; or
a monitoring purpose of a reference signal (RS).

20. The terminal of claim 17, wherein the first configuration information comprises one or multiple radio link management resource sets;
the one radio link management resource set or each of the multiple radio link management resource sets is associated with one piece of given identifier information of TRP.

21. The terminal of claim 18 or 19, wherein in case that the monitoring purpose of the radio link management resource set and/or the monitoring purpose of the RS is a given purpose, the identifier information of TRP is given identifier information of TRP, or the identifier information of TRP is identifier information of TRP associated with the RS;
wherein the given purpose comprises one or more of the following purposes:
for radio link monitoring; or
for beam failure detection.

22. The terminal of any of claims 18 to 20, wherein in case that the first configuration information comprises one radio link management resource set, and the one radio link management resource set is used to perform failure detection on a reference signal (RS) for one TRP, the one radio link management resource set is associated with one TRP in one or more of the following modes:
each RS in the monitoring resource set comprised in the one radio link management resource set is associated with one piece of given identifier information of TRP;
the one radio link management resource set only comprises one piece of identifier information of TRP; all RSs in the monitoring resource set comprised in the one radio link management resource set are associated with the one piece of identifier information of TRP; or
each RS in the monitoring resource set comprised in the one radio link management resource set is associated with one piece of identifier information of TRP, and the identifier information of TRP associated with each RS is the same; the identifier information of TRP associated with each RS is comprised in the monitoring resource set.

23. The terminal of any of claims 18 to 20, wherein in case that the first configuration information comprises one radio link management resource set, and the one radio link management resource set is used to perform failure detection on reference signals (RSs) for multiple TRPs, the one radio link management resource set is associated with the multiple TRPs in the following mode:
each RS in the monitoring resource set comprised in the one radio link management resource set is associated with one piece of identifier information of TRP; and the identifier information of TRP associated with all RSs comprises multiple types of identifier information of TRP.

24. The terminal of any of claims 18 to 20, wherein in case that the first configuration information comprises multiple radio link management resource sets, and the multiple radio link management resource sets are used to perform failure detection on reference signals (RSs) for multiple TRPs, the multiple radio link management resource sets are associated with the multiple TRPs in one or more of the following modes:
each of the multiple radio link management resource sets is associated with one or more pieces of given identifier information of TRP; or
each of the multiple radio link management resource sets comprises one or more pieces of given identifier information of TRP associated with the each of the multiple radio link management resource sets.

25. The terminal of claim 18, wherein the configuration information of the constant for radio resource management comprises one or more pieces of the following information:
a first timer, used for controlling radio link failure (RLF);
a second timer, used for controlling reestablishment;
a first in-sync threshold, used for determining in-sync;
a first out-of-sync threshold, used for determining out-of-sync;
a first counter, used for counting out-of-sync indications; or
a second counter, used for counting in-sync indications.

26. The terminal of any of claims 18 to 20, wherein performing the radio link quality management between the terminal and the configured cell based on the first configuration information comprises:
in case that a radio link failure (RLF) occurs between the terminal and a first TRP, the terminal performs at least one or more of the following operations:
triggering a radio resource control (RRC) reestablishment procedure;
reporting RLF information between the terminal and the first TRP through another TRP where no RLF occurs;
reporting RLF information between the terminal and the first TRP through another cell; or
reporting RLF information between the terminal and the first TRP through another node;
or, comprises:
in case that a cell RLF occurs, the terminal performs at least one or more of the following operations:
triggering a radio resource control (RRC) reestablishment procedure;
reporting cell RLF information through another TRP where no RLF occurs;
reporting cell RLF information through another cell; or
reporting cell RLF information through another node;
or, comprises:
in a dual connectivity (DC) scenario, in case that an RLF is detected in a primary cell (PCell) or in a primary secondary cell (PSCell), the terminal transmits a master cell group (MCG) failure message or a secondary cell group (SCG) failure message;
wherein the first TRP is one of the at least one TRP associated with the first message.

27. The terminal of claim 26, wherein in case that the first TRP is a given TRP, the RLF between the terminal and the first TRP comprises one or more of the following situations:
the terminal determines that a failure occurs in a radio link between the terminal and the first TRP based on identifier information of the first TRP comprised in the one radio link management resource set; or
the terminal determines that a failure occurs in a radio link between the terminal and the first TRP based on identifier information of the first TRP comprised in one radio link management resource set in the multiple radio link management resource sets;
in case that the first TRP is a TRP other than the given TRP, the RLF between the terminal and the first TRP comprises one or more of the following situations:
the terminal determines that a failure occurs in a radio link between the terminal and the first TRP based on part or all of identifier information of the first TRP comprised in the one radio link management resource set; or
the terminal determines that a failure occurs in a radio link between the terminal and the first TRP based on part or all of identifier information of the first TRP comprised in the multiple radio link management resource sets;
the cell RLF comprises one or more of the following situations:
the terminal determines the cell RLF based on identifier information of a second TRP comprised in the one radio link management resource set;
the terminal determines the cell RLF based on identifier information of a second TRP comprised in one radio link management resource set in the multiple radio link management resource sets;
the terminal determines the cell RLF based on part or all of identifier information of a third TRP comprised in the one radio link management resource set;
the terminal determines the cell RLF based on part or all of identifier information of a third TRP comprised in the multiple radio link management resource sets; or
the terminal determines the cell RLF based on identifier information of a second TRP and all of identifier information of a third TRP comprised in the one radio link management resource set or the multiple radio link management resource sets;
wherein any of the second TRP and the third TRP is one of the at least one TRP associated with the first message.

28. The terminal of claim 17, wherein the second configuration information comprises a beam failure management resource set;
the beam failure management resource set comprises at least one piece of candidate beam recovery configuration information; and the candidate beam recovery configuration information comprises one or more pieces of the following information:
a candidate beam reference signal (RS) identifier; or
a TRP identifier.

29. A network device, comprising a memory, a transceiver and a processor,
wherein the memory is used for storing a computer program, the transceiver is used for transmitting and receiving data under control of the processor, and the processor is used for reading the computer program in the memory and performing the following operations of:
transmitting a first message to a terminal, wherein the first message comprises one or more pieces of the following configuration information:
first configuration information, used for radio link quality management between the terminal and a configured cell; or
second configuration information, used for beam failure management between the terminal and a configured cell;
wherein the configured cell is configured with at least one transmission and reception point (TRP) associated with the first message.

30. The network device of claim 29, wherein the first configuration information comprises one or multiple radio link management resource sets;
wherein the one radio link management resource set or each of the multiple radio link management resource sets comprises one or more pieces of the following information:
a monitoring resource set;
identifier information of TRP;
configuration information of a constant for radio resource management; or
a monitoring purpose of the radio link management resource set.

31. The network device of claim 30, wherein the monitoring resource set comprises one or more pieces of the following information:
identifier information of a reference signal (RS);
identifier information of TRP; or
a monitoring purpose of a reference signal (RS).

32. The network device of claim 30, wherein the configuration information of the constant for radio resource management comprises one or more pieces of the following information:
a first timer, used for controlling radio link failure (RLF);
a second timer, used for controlling reestablishment;
a first in-sync threshold, used for determining in-sync;
a first out-of-sync threshold, used for determining out-of-sync;
a first counter, used for counting out-of-sync indications; or
a second counter, used for counting in-sync indications.

33. An apparatus for radio link management configuration, comprising:
an obtaining module, used for obtaining a first message transmitted from a network device, wherein the first message comprises one or more pieces of the following configuration information:
first configuration information, used for radio link quality management between the terminal and a configured cell; or
second configuration information, used for beam failure management between the terminal and a configured cell;
a processing module, used for performing radio link quality management between the terminal and the configured cell based on the first configuration information, and/or performing beam failure management between the terminal and the configured cell based on the second configuration information;
wherein the configured cell is configured with at least one transmission and reception point (TRP) associated with the first message.

34. The apparatus of claim 33, wherein the first configuration information comprises one or multiple radio link management resource sets;
wherein the one radio link management resource set or each of the multiple radio link management resource sets comprises one or more pieces of the following information:
a monitoring resource set;
identifier information of TRP;
configuration information of a constant for radio resource management; or
a monitoring purpose of the radio link management resource set.

35. The apparatus of claim 34, wherein the monitoring resource set comprises one or more pieces of the following information:
identifier information of a reference signal (RS);
identifier information of TRP; or
a monitoring purpose of a reference signal (RS).

36. The apparatus of claim 33, wherein the first configuration information comprises one or multiple radio link management resource sets;
the one radio link management resource set or each of the multiple radio link management resource sets is associated with one piece of given identifier information of TRP.

37. The apparatus of claim 34 or 35, wherein in case that the monitoring purpose of the radio link management resource set and/or the monitoring purpose of the RS is a given purpose, the identifier information of TRP is given identifier information of TRP, or the identifier information of TRP is identifier information of TRP associated with the RS;
wherein the given purpose comprises one or more of the following purposes:
for radio link monitoring; or
for beam failure detection.

38. The apparatus of any of claims 34 to 36, wherein in case that the first configuration information comprises one radio link management resource set, and the one radio link management resource set is used to perform failure detection on a reference signal (RS) for one TRP, the one radio link management resource set is associated with one TRP in one or more of the following modes:
each RS in the monitoring resource set comprised in the one radio link management resource set is associated with one piece of given identifier information of TRP;
the one radio link management resource set only comprises one piece of identifier information of TRP; all RSs in the monitoring resource set comprised in the one radio link management resource set are associated with the one piece of identifier information of TRP; or
each RS in the monitoring resource set comprised in the one radio link management resource set is associated with one piece of identifier information of TRP, and the identifier information of TRP associated with each RS is the same; the identifier information of TRP associated with each RS is comprised in the monitoring resource set.

39. The apparatus of any of claims 34 to 36, wherein in case that the first configuration information comprises one radio link management resource set, and the one radio link management resource set is used to perform failure detection on reference signals (RSs) for multiple TRPs, the one radio link management resource set is associated with the multiple TRPs in the following mode:
each RS in the monitoring resource set comprised in the one radio link management resource set is associated with one piece of identifier information of TRP; and the identifier information of TRP associated with all RSs comprises multiple types of identifier information of TRP.

40. The apparatus of any of claims 34 to 36, wherein in case that the first configuration information comprises multiple radio link management resource sets, and the multiple radio link management resource sets are used to perform failure detection on reference signals (RSs) for multiple TRPs, the multiple radio link management resource sets are associated with the multiple TRPs in one or more of the following modes:
each of the multiple radio link management resource sets is associated with one or more pieces of given identifier information of TRP; or
each of the multiple radio link management resource sets comprises one or more pieces of given identifier information of TRP associated with the each of the multiple radio link management resource sets.

41. The apparatus of claim 34, wherein the configuration information of the constant for radio resource management comprises one or more pieces of the following information:
a first timer, used for controlling radio link failure (RLF);
a second timer, used for controlling reestablishment;
a first in-sync threshold, used for determining in-sync;
a first out-of-sync threshold, used for determining out-of-sync;
a first counter, used for counting out-of-sync indications; or
a second counter, used for counting in-sync indications.

42. The apparatus of any of claims 34 to 36, wherein performing the radio link quality management between the terminal and the configured cell based on the first configuration information comprises:
in case that a radio link failure (RLF) occurs between the terminal and a first TRP, the terminal performs at least one or more of the following operations:
triggering a radio resource control (RRC) reestablishment procedure;
reporting RLF information between the terminal and the first TRP through another TRP where no RLF occurs;
reporting RLF information between the terminal and the first TRP through another cell; or
reporting RLF information between the terminal and the first TRP through another node;
or, comprises:
in case that a cell RLF occurs, the terminal performs at least one or more of the following operations:
triggering a radio resource control (RRC) reestablishment procedure;
reporting cell RLF information through another TRP where no RLF occurs;
reporting cell RLF information through another cell; or
reporting cell RLF information through another node;
or, comprises:
in a dual connectivity (DC) scenario, in case that an RLF is detected in a primary cell (PCell) or in a primary secondary cell (PSCell), the terminal transmits a master cell group (MCG) failure message or a secondary cell group (SCG) failure message;
wherein the first TRP is one of the at least one TRP associated with the first message.

43. The apparatus of claim 42, wherein in case that the first TRP is a given TRP, the RLF between the terminal and the first TRP comprises one or more of the following situations:
the terminal determines that a failure occurs in a radio link between the terminal and the first TRP based on identifier information of the first TRP comprised in the one radio link management resource set; or
the terminal determines that a failure occurs in a radio link between the terminal and the first TRP based on identifier information of the first TRP comprised in one radio link management resource set in the multiple radio link management resource sets;
in case that the first TRP is a TRP other than the given TRP, the RLF between the terminal and the first TRP comprises one or more of the following situations:
the terminal determines that a failure occurs in a radio link between the terminal and the first TRP based on part or all of identifier information of the first TRP comprised in the one radio link management resource set; or
the terminal determines that a failure occurs in a radio link between the terminal and the first TRP based on part or all of identifier information of the first TRP comprised in the multiple radio link management resource sets;
the cell RLF comprises one or more of the following situations:
the terminal determines the cell RLF based on identifier information of a second TRP comprised in the one radio link management resource set;
the terminal determines the cell RLF based on identifier information of a second TRP comprised in one radio link management resource set in the multiple radio link management resource sets;
the terminal determines the cell RLF based on part or all of identifier information of a third TRP comprised in the one radio link management resource set;
the terminal determines the cell RLF based on part or all of identifier information of a third TRP comprised in the multiple radio link management resource sets; or
the terminal determines the cell RLF based on identifier information of a second TRP and all of identifier information of a third TRP comprised in the one radio link management resource set or the multiple radio link management resource sets;
wherein any of the second TRP and the third TRP is one of the at least one TRP associated with the first message.

44. The apparatus of claim 33, wherein the second configuration information comprises a beam failure management resource set;
the beam failure management resource set comprises at least one piece of candidate beam recovery configuration information; and the candidate beam recovery configuration information comprises one or more pieces of the following information:
a candidate beam reference signal (RS) identifier; or
a TRP identifier.

45. An apparatus for radio link management configuration, comprising:
a transmitting module, used for transmitting a first message to a terminal, wherein the first message comprises one or more pieces of the following configuration information:
first configuration information, used for radio link quality management between the terminal and a configured cell; or
second configuration information, used for beam failure management between the terminal and a configured cell;
wherein the configured cell is configured with at least one transmission and reception point (TRP) associated with the first message.

46. The apparatus of claim 45, wherein the first configuration information comprises one or multiple radio link management resource sets;
wherein the one radio link management resource set or each of the multiple radio link management resource sets comprises one or more pieces of the following information:
a monitoring resource set;
identifier information of TRP;
configuration information of a constant for radio resource management; or
a monitoring purpose of the radio link management resource set.

47. The apparatus of claim 46, wherein the monitoring resource set comprises one or more pieces of the following information:
identifier information of a reference signal (RS);
identifier information of TRP; or
a monitoring purpose of a reference signal (RS).

48. The apparatus of claim 46, wherein the configuration information of the constant for radio resource management comprises one or more pieces of the following information:
a first timer, used for controlling radio link failure (RLF);
a second timer, used for controlling reestablishment;
a first in-sync threshold, used for determining in-sync;
a first out-of-sync threshold, used for determining out-of-sync;
a first counter, used for counting out-of-sync indications; or
a second counter, used for counting in-sync indications.

49. A computer readable storage medium storing a computer program that causes a computer to perform the method of any of claims 1 to 12, or perform the method of any of claims 13 to 16.
